(19) Europäisches Patentamt
European Patent Office
Office européen des brevets

(11) **EP 3 951 384 A1**

(12) **EUROPEAN PATENT APPLICATION**

(43) Date of publication:
**09.02.2022 Bulletin 2022/06**

(21) Application number: **21188720.3**

(22) Date of filing: **30.07.2021**

(51) International Patent Classification (IPC):
***G01N 30/86*** (2006.01)

(52) Cooperative Patent Classification (CPC):
**G01N 30/8631; G01N 30/8637; G01N 30/8689**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.08.2020 US 202016984385**

(71) Applicants:
• **Dionex Corporation**
**Sunnyvale, CA 94085 (US)**

• **The Board of Regents,The University of Texas System**
**Austin, TX 78701 (US)**

(72) Inventors:
• **KADJO, Akinde**
**Sunnyvale, CA, 94085 (US)**
• **SRINIVASAN, Kannan**
**Sunnyvale, CA, 94085 (US)**
• **DASGUPTA, Purnendu K.**
**Arlington, TX, 76006-2779 (US)**

(74) Representative: **Hoffmann Eitle**
**Patent- und Rechtsanwälte PartmbB**
**Arabellastraße 30**
**81925 München (DE)**

(54) **PEAK PROFILE FOR IDENTIFYING AN ANALYTE IN A CHROMATROGRAM**

(57)      A method of determining an identity of a first analyte in a sample is described that includes passing the first analyte through a chromatographic column and detecting a signal curve of the first analyte by a chromatographic detector, wherein the signal curve includes a peak profile of the first analyte. The peak profile is defined by a plurality of measured data points configured to plot onto a signal coordinate system. The method further includes normalizing the peak profile of the first analyte to form a normalized peak profile, wherein the normalized peak profile includes scaling the plurality of measured data points, and wherein the normalized peak profile is defined by a plurality of normalized data points configured to plot onto a normalized coordinate system, and comparing the normalized peak profile of the first analyte with a normalized peak profile of a second analyte.

FIG. 3

**(Cont. next page)**

EP 3 951 384 A1

FIG. 4

**Description**

TECHNICAL FIELD

The present disclosure is directed to the field of chromatography. More particularly, the present disclosure relates to an ion chromatographic system and method that provides for improved identification of analytes using the profile of a peak of an analyte during chromatography.

BACKGROUND OF THE INVENTION

Chromatography is a technique used for separating and identifying the constituents in a mixture. In chromatography, analytes travel through a column while interacting with a stationary phase under the influence of the mobile phase. Separation is achieved due to the differing affinities of the analytes and a mobile phase with the stationary phase. Also, assignment of the analytes with known peak names can be attained by comparing the retention time of the unknown peak versus that of the injected pure standards. An unknown peak having the same retention time as that of a particular known analyte can be used as an assignment routine corresponding to the known analyte. However, this assignment methodology is not an identification method since it is not entirely reliable. Under certain circumstances, retention times can shift for the same analyte when tested at different injected concentrations. Similarly, a very high amount of a single analyte or matrix ions may affect the retention times of other analytes present. These retention time changes if unaccounted can cause a misassignment of the analyte of interest. Moreover, analytes eluting very close from one another can lead to miss-identification. To solve this and related challenges, additional analyte detectors are commonly used, such as mass spectrometers which can identify the analyte based on the mass-to-charge ratio. However, because mass spectrometers are relatively expensive detectors which require considerable expense to maintain and expertise to operate, they are not easily accessible to many laboratories. Also, matrix induced retention time shifts can also impact the mass spectrometry based determination of identity.

BRIEF SUMMARY OF THE INVENTION

In accordance with the concepts described herein, one method of determining an identity of a first analyte, such as an unknown analyte, in a sample can include passing the first analyte through a chromatographic column and detecting a signal curve of the first analyte by a chromatographic detector. The signal curve can include a peak profile of the first analyte, wherein the peak profile can be defined by a plurality of measured data points configured to plot onto a signal coordinate system. Next, the method can include normalizing the peak profile of the first analyte to form a normalized peak profile, wherein the normalized peak profile can include scaling the plurality of measured data points. As such, the normalized peak profile can be defined by a plurality of normalized data points configured to plot onto a normalized coordinate system. Further, the method can include comparing the normalized peak profile of the first analyte with a normalized peak profile of a second analyte, such as a known or predicted analyte. Finally, the first analyte can be identified as the second analyte based upon the comparison.

In some aspects of the concepts described herein, the method can include comparing the normalized peak profile of the first analyte with the normalized peak profile of the second analyte includes correlating the normalized peak profile of the first analyte with the normalized peak profile of the second analyte. Correlating the normalized peak profile of the first analyte can also include calculating a first plurality of absolute proportion errors. The first plurality of absolute proportion errors can be based on (1) the plurality of normalized data points of the normalized peak profile of the first analyte and (2) a first plurality of known data points corresponding to the normalized peak profile of the second analyte. A first identity proportion for the first plurality of absolute proportion errors can then be calculated by dividing a count of the absolute proportion errors that are less than a predetermined absolute proportion threshold with a total number of absolute proportion errors of the first plurality of absolute proportion errors.

In another aspect, a system for determining an identity of a first analyte in a sample can include a chromatographic column, a chromatographic detector, and a data processor. The chromatographic detector can be configured to detect an amount of an analyte from the chromatographic column, and to detect a peak profile of the analyte. The peak profile can be defined by a plurality of measured data points each having an x and y coordinate configured to plot onto a coordinate system. The data processor can be configured to receive the plurality of measured data points from the chromatographic detector, adjust the y coordinates of each of the plurality of measured data points of the first analyte to form a normalized peak profile, and compare the normalized peak profile of the first analyte with a normalized peak profile of a second analyte.

In another aspect, a method can be used to identify a first analyte in a sample, wherein the sample can be flowed through a chromatographic column. The method can include detecting a signal curve of the first analyte by a chromatographic detector, wherein the signal curve can include a peak profile of the first analyte. Further, the peak profile can be defined by a plurality of measured data points. Next, the method can include normalizing the plurality of measured data points of the peak profile to form a normalized peak profile, wherein the normalized peak profile can include adjusting a component of each of the plurality of measured data points to define a plurality of normalized data points. The normalized peak profile of the first analyte can then be compared with a normalized peak profile of a second analyte, wherein correlating can include comparing a first shape defined by the normalized peak profile of the first analyte with a second shape defined by the normalized peak profile of the second analyte and determining whether the sample includes the second analyte based upon the correlation.

As such, the systems and methods disclosed can provide improved identification of the peaks of interest for ion chromatography but may be applicable to other forms of chromatography.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

BRIEF DESCRIPTION OF THE DRAWINGS

For a more complete understanding of the present invention, reference is now made to the following descriptions taken in conjunction with the accompanying drawings, in which:

FIG. 1 depicts a graphical representation of one exemplary peak-printing coordinate system;

FIG. 2 depicts a graphical representation of one exemplary normalized peak profile positioned within a coordinate system;

FIG. 3 depicts a graphical representation of a correlation of an unknown test analyte and a known analyte, illustrating a positive identification of the unknown test analyte;

FIG. 4 depicts a graphical representation of a correlation of an unknown test analyte and a known analyte, illustrating a negative identification of the unknown test analyte;

FIG. 5 depicts a graphical representation of the coefficient of determination formula for $f_i$ that is a data point of the known normalized peak and $y_i$ that is a data point of the unknown normalized peak;

FIG. 6A depicts a graphical representation of the absolute percent error (APE) formula for $f_i$ that is a data point of the known normalized peak and $y_i$ that is a data point of the unknown normalized peak;

FIG. 6B depicts a graphical representation of the absolute percent error (APE) formula for a half peak width of the unknown normalized peak ($w_{ylh}$ or $w_{yrh}$) and a half peak width of the known normalized peak ($w_{flh}$ or $w_{frh}$);

FIG. 7A depicts a graphical representation of a measured chromatographic peak profile data set collected for a Chloride sample;

FIG. 7B depicts a graphical representation of a normalized chromatographic peak profile data set collected for the Chloride sample of FIG. 7A;

FIG. 8A depicts a graphical representation of a correlation between a measured peak profile of a 1.0 ppm sample of Chloride and a measured peak profile of a 0.1 ppm sample of Chloride;

FIG. 8B depicts a graphical representation of a correlation between a measured peak profile of a 1 ppm sample of Chloride and a measured peak profile of a 1.0 ppm sample of Bromide;

FIG. 9A depicts a graphical representation of a measured set of peak profiles of Fluoride at varying concentrations;

FIG. 9B depicts a graphical representation of a normalized set of the peak profiles of Fluoride of FIG. 9A;

FIG. 9C depicts a graphical representation of the normalized set of the peak profiles of Fluoride of FIG. 9B, shown shifted to a common origin of a coordinate system;

FIG. 10A depicts a graphical representation of a normalized set of peak profiles of Chloride at varying concentrations, shown shifted to a common origin of a coordinate system;

FIG. 10B depicts a graphical representation of a normalized set of peak profiles of Nitrite at varying concentrations, shown shifted to a common origin of a coordinate system;

FIG. 10C depicts a graphical representation of a normalized set of peak profiles of Nitrate at varying concentrations, shown shifted to a common origin of a coordinate system;

FIG. 11A depicts a graphical representation of single third-order polynomial fit data mapping of a set of calibration data, shown with a time interval (θt) equal to - 0.1;

FIG. 11B depicts a graphical representation of single third-order polynomial fit data mapping of a set of calibration data, shown with a time interval (θt) equal to - 0.05;

FIG. 11C depicts a graphical representation of single third-order polynomial fit data mapping of a set of calibration data, shown with a time interval (θt) equal to 0.1;

FIG. 12 depicts a graphical representation of a mapping calibration of Fluoride;

FIG. 13 depicts a graphical representation of six analytes separated on an IonPac AS15 2x250 mm column;

FIG. 14 depicts a graphical representation of a mapping calibration of normalized Fluoride peak profiles shown at different concentrations in a peak-printing coordinate system;

FIG. 15 depicts a data table representation of best fit constants of the mapping calibration of FIG. 14 at each time interval (θt);

FIG. 16 depicts a graphical representation of a mapping calibration of an unknown test analyte and a predicted analyte, illustrating a positive Fluoride identification of the unknown test analyte;

FIG. 17 depicts a graphical representation of a mapping calibration of an unknown test analyte and a predicted analyte, illustrating a negative Fluoride identification of the unknown test analyte;

FIG. 18 depicts a data table representation of an identification summary of analytes separated on the AS 15 column;

FIG. 19 depicts a chromatogram of a drinking water sample;

FIG. 20 depicts a graphical representation of the results of overlaying chromatograms of 3 ppm Sulfate and 3 ppm Nitrate;

FIG. 21 depicts a data table representation of profile-based identification results of Sulfate and Nitrate;

FIG. 22 depicts a data table representation of an identification summary of analytes separated on the AS 18 column;

FIG. 23 depicts a data table representation of an identification summary of analytes separated on the IonPac AS 19 or AS22 column;

FIG. 24 depicts a data table representation of an identification summary of analytes separated on the IonPac CS16 column;

FIG. 25 depicts a graphical representation of a measured peak profile of a mixture of 100 $\mu$M Bromate and 100 $\mu$M Chloride;

FIG. 26 depicts a graphical representation of measured peak profiles of individual injections of 10 $\mu$M Bromate and 10 $\mu$M Chloride;

FIG. 27A depicts a graphical representation of a Bromide peak profile partially resolved with an unknown peak profile;

FIG. 27B depicts a graphical representation of individual absolute percent errors (APE) for Bromide identification, illustrating regions with less than 5% errors; and

FIG. 27C depicts a graphical representation of deconvoluted Bromide signals from the peak profile of FIG. 27A.

## DETAILED DESCRIPTION OF THE INVENTION

Embodiments of systems and methods for improved identification of analytes in ion chromatography are described herein and in the accompanying drawing figures.

The section headings used herein are for organizational purposes only and are not to be construed as limiting the described subject matter in any way.

In this detailed description of the various embodiments, for purposes of explanation, numerous specific details are set forth to provide a thorough understanding of the embodiments disclosed. One skilled in the art will appreciate, however, that these various embodiments may be practiced with or without these specific details. In other instances, structures and devices are shown in block diagram form. Furthermore, one skilled in the art can readily appreciate that the specific sequences in which methods are presented and performed are illustrative and it is contemplated that the sequences can be varied and still remain within the spirit and scope of the various embodiments disclosed herein.

All literature and similar materials cited in this application, including but not limited to, patents, patent applications, articles, books, treatises, and internet web pages are expressly incorporated by reference in their entirety for any purpose. Unless described otherwise, all technical and scientific terms used herein have a meaning as is commonly understood by one of ordinary skill in the art to which the various embodiments described herein belongs.

It will be appreciated that there is an implied "about" prior to the temperatures, concentrations, times, pressures, flow rates, cross-sectional areas, etc. discussed in the present teachings, such that slight and insubstantial deviations are within the scope of the present teachings. In this application, the use of the singular includes the plural unless specifically stated otherwise. Also, the use of "comprise", "comprises", "comprising", "contain", "contains", "containing", "include", "includes", and "including" are not intended to be limiting. It is to be understood that both the foregoing general description and the following detailed description are exemplary and explanatory only and are not restrictive of the present teachings.

As used herein, "a" or "an" also may refer to "at least one" or "one or more." Also, the use of "or" is inclusive, such that the phrase "A or B" is true when "A" is true, "B" is true, or both "A" and "B" are true. Further, unless otherwise required by context, singular terms shall include pluralities and plural terms shall include the singular.

A "system" sets forth a set of components, real or abstract, comprising a whole where each component interacts with or is related to at least one other component within the whole.

Introduction

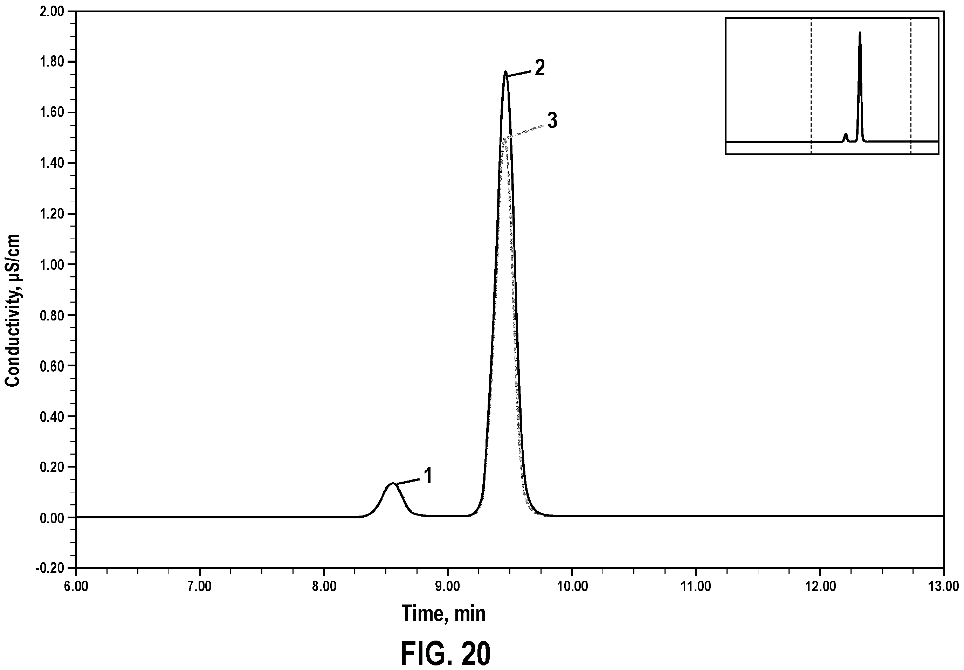

Embodiments of this disclosure can achieve identification of analytes in ion chromatography through a process that can use a normalized profile of a peak for identity confirmation referred to herein as "peak-printing." In accordance with various aspects of this disclosure, the peak profile, or peak shape, of a specific analyte over time can be a characteristic signature of the identity of the analyte. The shape of the peak can be mapped out from a given set of calibration data of the analyte at different concentrations. Therefore, by comparing and/or correlating a peak profile of an unknown analyte to the peak profile of a known analyte, the identity of the unknown analyte can be confirmed at specified statistical levels of certainty. Even for analytes having the same retention times, one or more peak-printing systems and methods described herein yields improved identification of the analytes without the use of a mass spectrometer or other similar device. For example, chromatographic conditions in FIG. 20 for Nitrate and Sulfate are such that Nitrate and Sulfate are often mis-identified as the same due to the close proximity of their retention times under certain conditions. Peak-printing, as pursued by embodiments of this disclosure, can more correctly identify Nitrate peaks as Nitrate, or identify that Sulfate peaks aren't Nitrate, and vice versa. The approach can also say if there is a mixture of Nitrate and Sulfate peaks. Thus, improved identity of analytes is established with peak-printing from the predicted peak shapes alone during chromatography.

While the disclosed systems and methods can be applicable for ion chromatography, it is to be expressly understood that the disclosed systems and methods can also be applicable to other forms of chromatography, for example, liquid chromatography and gas chromatography.

Coordinate System

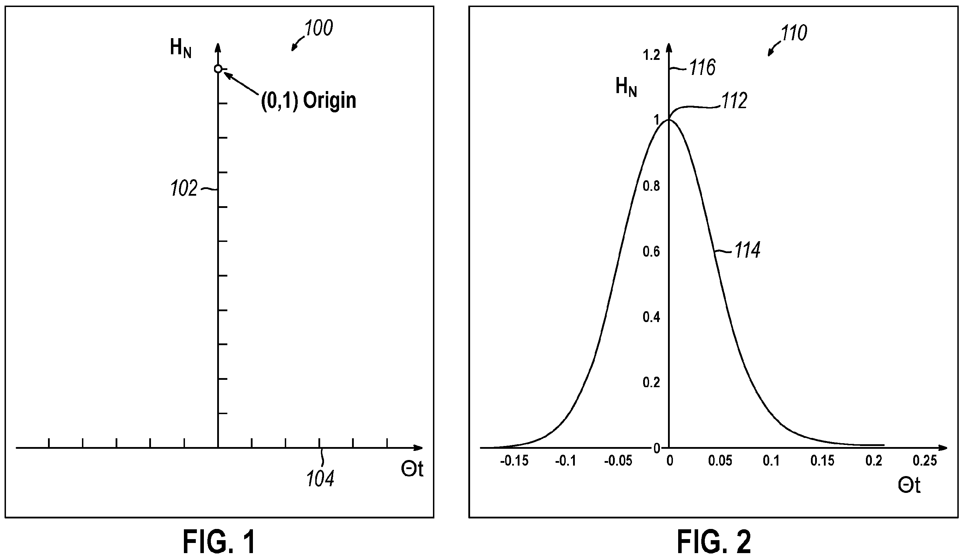

Peak-printing can involve the peak being normalized and transferred, or "mapped," to a coordinate system. The profile of a peak is often better emphasized when the peak is normalized. Normalization includes adjusting data points representative of peaks measured on different scales, or representative of peaks having data sets of different magnitudes, to a common scale. Normalization can include the adjustment of a height and/or a width component of one or more data sets representing a peak to a common height and/or width scale in relation to a data set representing a different peak. In one illustrative example, peak profile data sets can be adjusted to a particular height, such as, to unity (one). In this example, all representative data points forming up the peak are divided by the apex value of the peak therefore reducing the height of the peak such that the peak height maximum is equal to one. This "normalized" peak, at a given concentration of a certain analyte, is unique and thereafter can be used as a standard for identity confirmation for unknown analytes. Depicted in FIG. 1 is a coordinate system (100) of one example, referred-to as a peak-printing coordinate. Coordinate system (100) includes a plane with two perpendicular axes (102, 104). The vertical axis (102) represents the normalized height ($H_N$) of the peak profile while the horizontal axis (104) represents time (i.e., $\theta t$). For example, as depicted in FIG. 2, once a peak has been normalized it is moved to a peak-printing coordinate system, such as coordinate system (110), by aligning the peak apex (112) of the peak profile (114) with the Y axis (116) at the point of reference without any rotation nor stretching of the peak profile (114).

Matching Principle

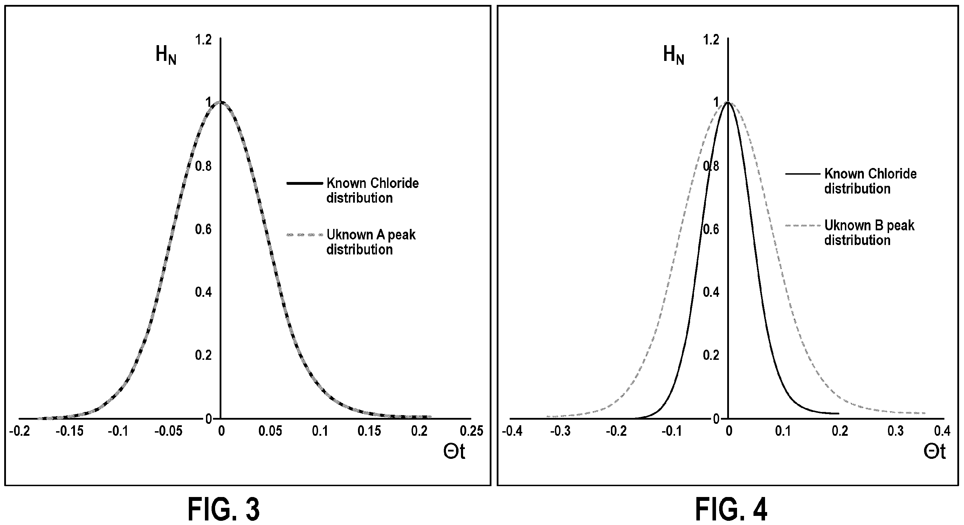

The normalized peak profile of an unknown analyte and the normalized standard (reference) peak can both be transferred to the same peak-printing coordinate system. Depicted in FIG. 3 is one example of an accurate correlation between the normalized peak profile of an unknown analyte and the normalized peak profile of a known analyte of Chloride. As shown, the peak profiles closely match, therefore confirming with substantial certainty that the unknown analyte includes Chloride. On the other hand, as depicted in FIG. 4, the normalized peak profile of a different, unknown analyte as in FIG. 3 and the normalized peak profile of a known analyte of Chloride do not closely match, therefore indicating that the unknown analyte is unlikely to be include Chloride.

The significance of a correlation between normalized peak profiles of two analytes may be judged by various data comparison methods, two of which will be described in detail herein. It should be understood, however, that any acceptable systems or methods of data comparison may be employed, including a simple visual comparison of two or more normalized peak profiles mapped onto a coordinate system. As such, data comparison techniques should not, in any instance, be limited to the particular methods described below.

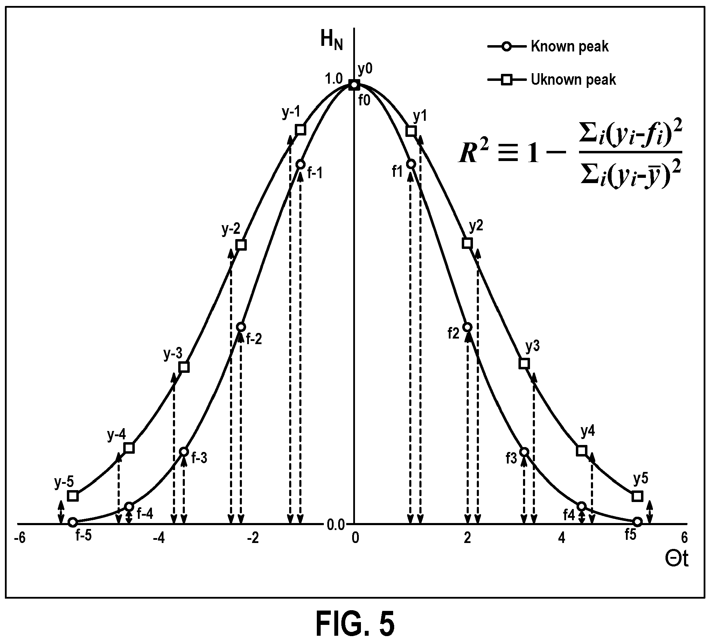

One particular data comparison method, depicted in FIG. 5, includes a coefficient of determination ($R^2$) calcu-

lated using the formula:

$$R^2 \equiv 1 - \frac{\Sigma_i (y_i - f_i)^2}{\Sigma_i (y_i - \bar{y})^2} \qquad\qquad \text{(Eq. 1)}$$

where data points $f_i$ are associated with the predicted normalized standard peak at time $i$, data points $y_i$ are associated with the unknown normalized peak, and $\bar{y}$ is the average of the data points from the unknown normalized peak. For example, $R^2 = 1$ is an indication of a perfect match between the normalized peak profiles of the two analytes, whereas $R^2$ values well below 1 indicate poorer matches. For peaks of a particular analyte, $R^2$ values are anticipated to be near 1. A threshold value for correlation can also be chosen to ensure that any deviations are taken into account. For example, a user can choose a value of the threshold which is based on observed experimental results. It may be preferred that $R^2$ threshold values fall between 0.9 and 1, it may be more preferred they fall between 0.99 and 1, and it may be most preferred they fall between 0.999 and 1.

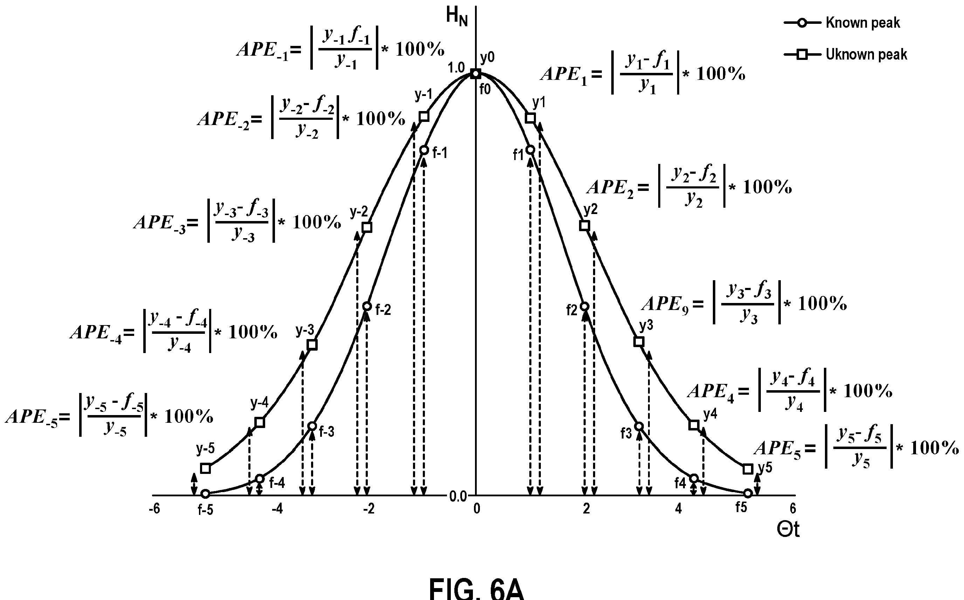

A second particular data comparison method, depicted in FIG. 6A, can be the absolute percent error method which exposes the individual contribution of the data points in the overall match of the peak shape. This method includes a residual calculation for each data point, specifically, calculation of the percent error between data points measured from the unknown analyte and data points of a known analyte, therefore highlighting the regions of the peak profile where there is no match. The individual absolute percent error (APE) is calculated using the formula:

$$APE_i = \left| \frac{y_i - f_i}{y_i} \right| * 100\% \qquad\qquad \text{(Eq. 2A)}$$

where data points $f_i$ are associated with the known normalized peak profile, and data points $y_i$ are associated with the unknown normalized peak. The data points $f_i$ can be the peak height corresponding with the known normalized peak profile, and data points $y_i$ can be the peak height corresponding with the unknown normalized peak profile.

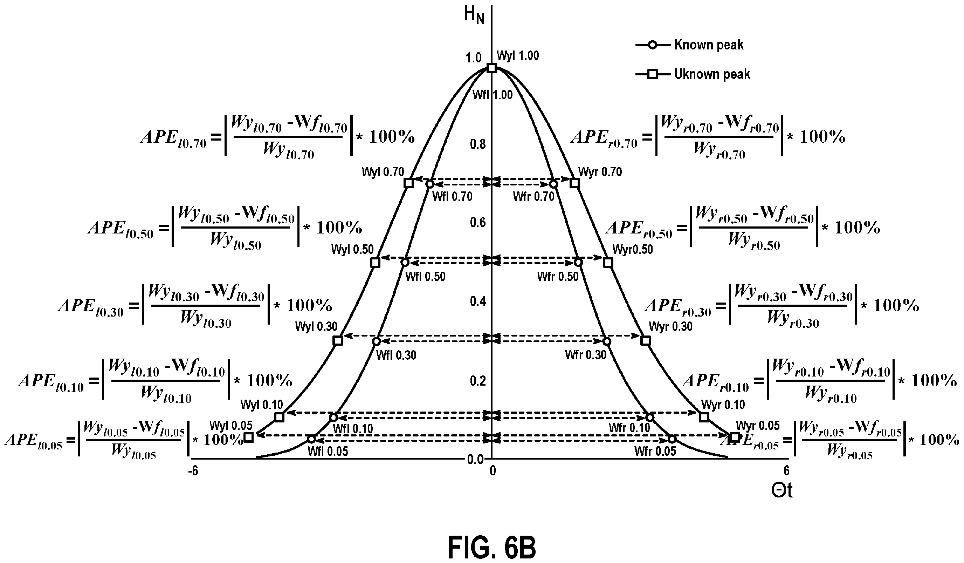

A third particular data comparison method, depicted in FIG. 6B, can be the absolute percent error method based on peak widths for the left hand side of the peak. This method includes a residual calculation for each data point, specifically, calculation of the percent error between data points measured from the unknown analyte and data points of a known analyte, therefore highlighting the regions of the peak profile where there is no match. The individual absolute percent error ($APE_{lh}$) based on peak widths for the left hand side of the peak at a proportion $h$ of the normalized peak height $H_N$ is calculated using Eq. 2B as shown below.

$$APE_{lh} = \left| \frac{w_{ylh} - w_{flh}}{w_{ylh}} \right| * 100\% \qquad\qquad \text{(Eq. 2B)}$$

The term $w_{ylh}$ represents a distance from a data point on the left hand side of the unknown normalized peak with a time value $i$ at a proportion $h$ of normalized $H_N$ to the origin (e.g., $\theta t = 0$). The term $w_{flh}$ represents a distance from a data point on the left hand side of the known normalized peak with a time value $i$ at the proportion $h$ of normalized $H_N$ to the origin (e.g., $\theta t = 0$). The terms $w_{ylh}$ and $w_{flh}$ correspond to the left half-widths at fixed normalized heights $h$ for the unknown and known normalized peak profiles, respectively. As illustrated in FIG. 6B, the proportion $h$ of normalized $H_N$ is 1, 0.7, 0.5, 0.3, 0.1, and 0.05. The unknown normalized peak can correspond to the peak resulting from the first analyte and the known normalized peak can correspond to the peak resulting from the second analyte.

A fourth particular data comparison method, also depicted in FIG. 6B, can be the absolute percent error method based on peak widths for the right-hand side of the peak. This method includes a residual calculation for each data point, specifically, calculation of the percent error between data points measured from the unknown analyte and data points of a known analyte, therefore highlighting the regions of the peak profile where there is no match. The individual absolute percent error ($APE_{rh}$) based on peak widths for the right hand side of the peak at a proportion $h$ of the normalized peak height $H_N$ is calculated using Eq. 2C as shown below.

$$APE_{rh} = \left| \frac{w_{yrh} - w_{frh}}{w_{yrh}} \right| * 100\% \qquad\qquad \text{(Eq. 2C)}$$

The term $w_{yrh}$ represents a distance from a data point on the right hand side of the unknown normalized peak with a time value $i$ at a proportion $h$ of normalized $H_N$ to the origin (e.g., $\theta t = 0$). The term $w_{frh}$ represents a distance from a data point on the right hand side of the known normalized peak with a time value $i$ at the proportion $h$ of normalized $H_N$ to the origin (e.g., $\theta t = 0$). The terms $w_{yrh}$ and $w_{frh}$ correspond to the right half-widths at fixed normalized heights $h$ for the unknown and known normalized peak profiles, respectively.

A fifth particular data comparison method can be the absolute percent error method based on peak widths for the right and left hand side of the peak together. The individual absolute percent error ($APE_h$) based on peak widths for the right and left hand sides of the peaks together is at a proportion $h$ of the normalized peak height $H_N$ calculated using Eq. 2D as shown below.

$$APE_h = \left| \frac{w_{yh} - w_{fh}}{w_{yh}} \right| * 100\% \qquad \text{(Eq. 2D)}$$

The term $w_{yh}$ represents a distance from a data point on the right hand side of the unknown normalized peak with a time value $i$ at a proportion $h$ of normalized $H_N$ to a data point on the left hand side of the unknown normalized peak with a time value $i$ at a proportion $h$ of normalized $H_N$. The term $w_{fh}$ represents a distance from a data point on the right hand side of the known normalized peak with a time value $i$ at the proportion $h$ of normalized $H_N$ to a data point on the left hand side of the known normalized peak with a time value $i$ at the proportion $h$ of normalized $H_N$.

As a prediction of match accuracy, a threshold APE (e.g., Eq's. 2, 2B, 2C, and 2D) can be determined for identity confirmation. Typically, a user can choose a value of the threshold based on observed experimental results. In one example, that APE threshold values can be chosen to be less than 10%, wherein the most preferred threshold value can be chosen to be less than 5%. The identity can, in this example, be confirmed when a particular percentage of all the APE values (e.g., a total of 10 APE calculations are shown on Fig. 6A as ranging from $APE_{-5}$ to $APE_{+5}$) calculated from the peak profile fall below the chosen APE threshold value criteria. This particular percentage (e.g., (a number of APE values below the APE threshold / the total number of APE values calculated from the peak profile) x 100) can be referred to as the set overall data point percentage (SODPP). For example, if the SODPP is equal to 80% and the APE threshold value is equal to 5%, that means 80% of the APE values making up the unknown peak should have less than 5% absolute error with the predicted peak for identity confirmation. Similarly, the minimum SODPP can be chosen based upon observed experimental results. In many instances, it may be preferred that the minimum SODPP values remain greater than 60%, but it may be most preferred that the minimum SODPP values remain greater than 80%.

The Normalized Peak as a Model Standard Peak for a Particular Analyte

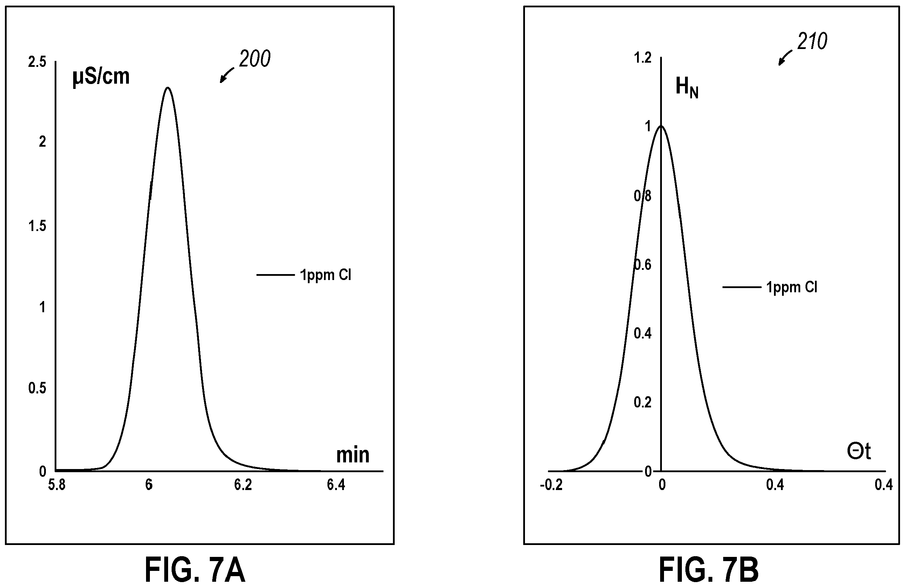

For a given analyte, the normalized peak profile is often consistent over a limited concentration range of the analyte. In other words, normalized peak profiles of a certain analyte remain similar without regard to the injected concentration. For example, as depicted in FIG. 7A is a peak profile (200) detected from a Chloride sample injected at 1.0 parts per million (ppm). Depicted in FIG. 7B is the normalized peak profile (210), based upon the Chloride peak profile of FIG. 7A. Peak profile (210) is normalized to a peak height of 1 unit. The normalized 1.0 ppm Chloride peak profile of FIG. 7B is then capable of being used as the standard peak profile thereafter for Chloride identity confirmation (i.e., correlations and/or matching with a peak profile of an unknown analyte) for the same or similar chemistry conditions.

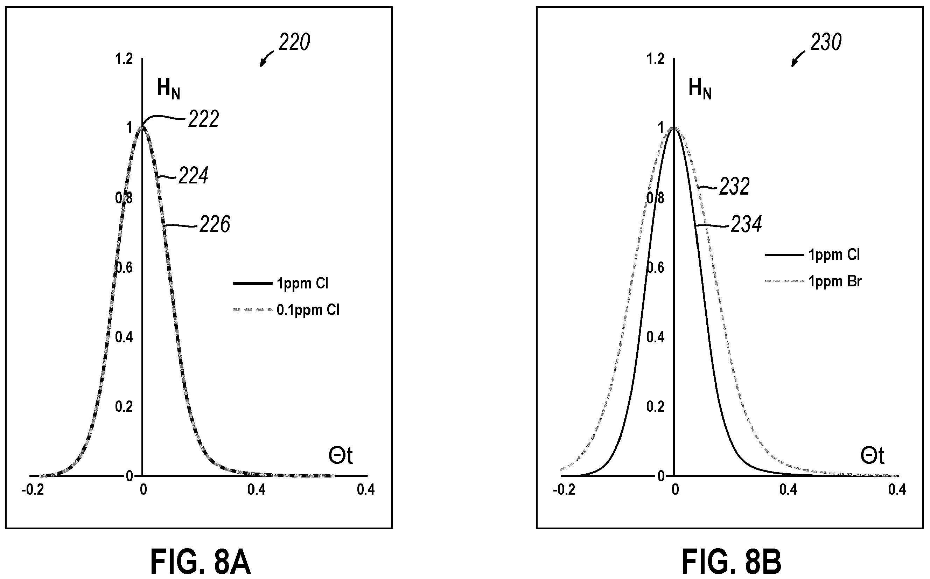

In another example, as depicted in the Chloride peak profile coordinate chart (220) of FIG. 8A, an analyte sample of Chloride is injected at 0.10 ppm to be used as a test analyte. The test results are first normalized to a height (222) of one, and the peak profile (224) is then correlated with the standard normalized Chloride peak profile (226) using the data comparison method utilizing the coefficient of determination ($R^2$). In this example, $R^2$ is equal to approximately 1.0000, as shown by the overlapping peak profiles (224, 226). The normalized peak profile for the test analyte of this example nearly perfectly matches and cannot be distinguished from the peak profile of the known analyte representing Chloride, suggesting the test analyte is or includes high concentrations of Chloride. On the other hand, as depicted in the coordinate chart (230) of FIG. 8B, a 1.0 ppm normalized Bromide peak profile (232) is correlated with the standard normalized Chloride peak profile (234). In this example, the calculated $R^2$ is equal to approximately 0.8059. As such, a poor correlation is observed between the normalized peak profile of the test analyte and the known, normalized peak profile of Bromide, therefore suggesting the test analyte is not or does not contain high concentrations of Chloride.

Peak Profile Behavior Dependence on Injected Concentration

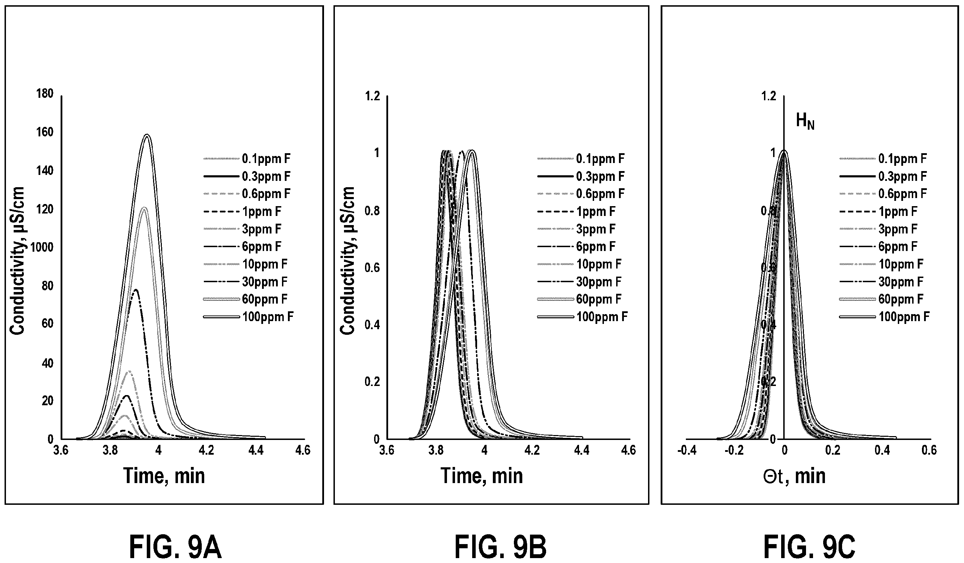

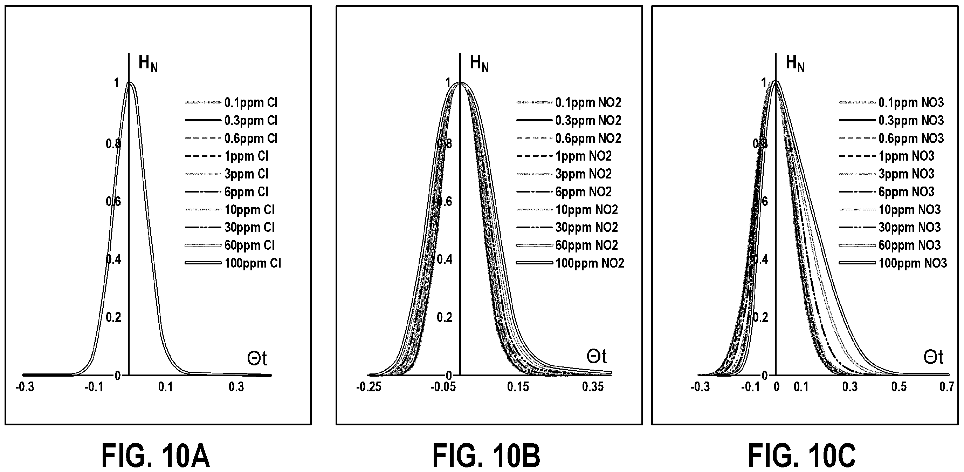

While the peak profile of a given analyte remains consistent over a limited, lower concentration range, a gradual change in the peak profile of that analyte is often observed as the concentration increases. The concentration at which this peak profile change occurs is often not known and is empirically derived as it is dependent upon multiple factors, such as experimental conditions, the chromatographic column, and the independent nature of analyte itself. As depicted in FIGS. 9A-C and 10A-C, changes in an analyte's peak profile is often unpredictable as the concentration of the analyte increases. For example, depicted in FIG. 9A is a collection of peak profiles of Fluoride injected at different concentrations ranging between 0.1 ppm to 100 ppm. FIG. 9B depicts the peak profiles of FIG. 9A normalized to a common height of one, and FIG. 9C depicts the normalized peak profiles of FIG. 9B shifted to a peak-printing coordinate system to emphasize the change of the peak profile shapes as a function of the concentration of the Fluoride analyte samples. As shown in FIG. 9C, the shapes of the Fluoride peaks are invariable until the concentration of Fluoride reaches approximately 1 ppm. Beyond 1 ppm, the Fluoride peak shape changes as shown in FIG. 9C.

As another example, depicted in FIG. 10A is a collection of normalized and shifted peak profiles of Chloride injected at different concentrations ranging between 0.1 ppm to 100 ppm, wherein the uniformity of peak shape is over approximately four orders of magnitude. FIG. 10B depicts a collection of normalized and shifted peak profiles of Nitrite injected at different concentrations ranging between 0.1 ppm to 100 ppm, wherein the differences as a function of the concentration occurs on both sides of the peak profile. FIG. 10C depicts a collection of normalized and shifted peak profiles of Nitrate injected at different concentrations ranging between 0.1 ppm to 100 ppm, wherein the leading edges of the peak profiles front in while the trailing edges of the peak profiles tail as the concentration increases.

Peak-Printing First Step: Data Mapping of a Calibration Data

As described herein, identity confirmation can be achieved by matching the normalized peak profile of a known analyte to the normalized peak profile of an unknown analyte. Due to the change in the shape of a peak profile of a given analyte over a large concentration range, a broader approach may be preferred, and therefore embodiments of the systems and methods described herein are operable to accommodate a larger analyte concentration range. In some embodiments, the change in peak profile shape relative to the concentration of the analyte can be mapped over the calibration range of the peak profile, and a mathematical model of the peak profile shape with respect to concentration change can therefore be created. The mathematical model can then be applied to an unknown peak profile of the same or similar analyte concentration range tested to more accurately predict the identity of the peak profile by confirming the identity by peak profile shape. This is because the peak profile shape is a manifestation of the change in analyte concentration of a peak profile as it transits through a chromatographic process and this change is a known profile for a given analyte. As such, the identity of the analyte can be confirmed from correlating the peak profile shape with known data sets.

Peak-printing can be achieved by a mapping calibration which includes using the normalized peaks of an analyte at several concentrations to predict the peak profile shape at any given concentration. In a sense, what may be achieved in this step is the calibration of analyte's peak shape as a function of the amount of the analyte which has been injected into the column. Mapping calibration can be used to predict the peak profile shape for a range of potential concentrations that would fall within the calibration range A mapping calibration set is built for the peak profile shape of the analyte as a function of the non-normalized peak area or non-normalized peak height, or the injected concentration. The non-normalized peak area, non-normalized peak height, or the injected concentration can interchangeably be used as the input variable. Preference may be given to the non-normalized peak area or non-normalized peak height as the input variable since those values are the least likely to contain errors (because, for example, concentrations reported by the user are often subject to solution preparation errors). For reference, the peak area of a peak of interest can be calculated by taking a sum of the signal data points or sum of the data points multiplied by the time interval. The boundary condition of time for the peak (e.g., start and stop time for a peak) can be based on a first tangential slope of the line for the leading portion of the peak and intersecting with the baseline and the second tangential slope of the line for the trailing portion of the peak intersecting with the baseline. When the absolute value of the first tangential slope and the second tangential slope for the respective data points are less than a predetermined threshold, then those data points will represent the lower and upper time points for determining the peak area. The first tangential slope and the second tangential slope may be identified by calculating a first derivative of the peak profile.

In this calibration, the input variable is the peak area (or peak height or peak concentration), while the output variable is the normalized height. The final shape calibration is a combination of multiple normalized height calibration at different time intervals. Along the time axis ($\theta t$), the peak profile shape data is sliced in as many time intervals as is permitted by the data sampling frequency. At each time interval along the time axis ($\theta t$), the normalized height (i.e., the output variable) is fitted to a polynomial that is a function of the peak area (i.e., the input variable). Presently, the application is demonstrated by the following formula with a third-degree polynomial; however, other polynomial degrees, whether higher or lower, may also be used:

$$f_{\theta t} = a_{\theta t} * x^3 + b_{\theta t} * x^2 + c_{\theta t} * x + d_{\theta t} \qquad\qquad (\text{Eq. 3})$$

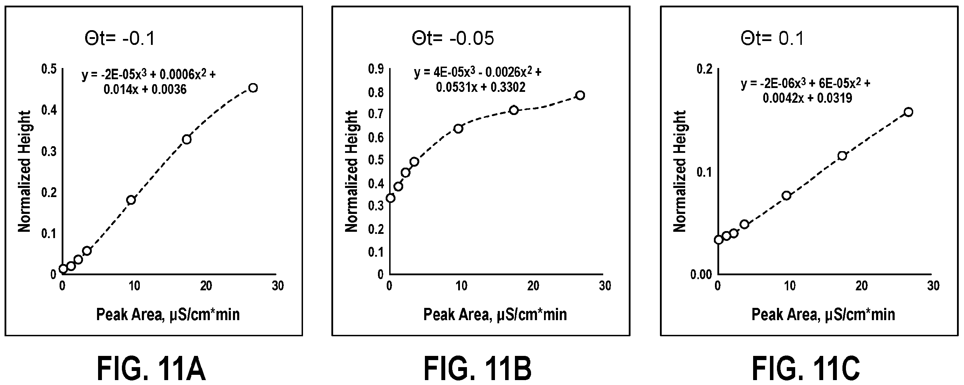

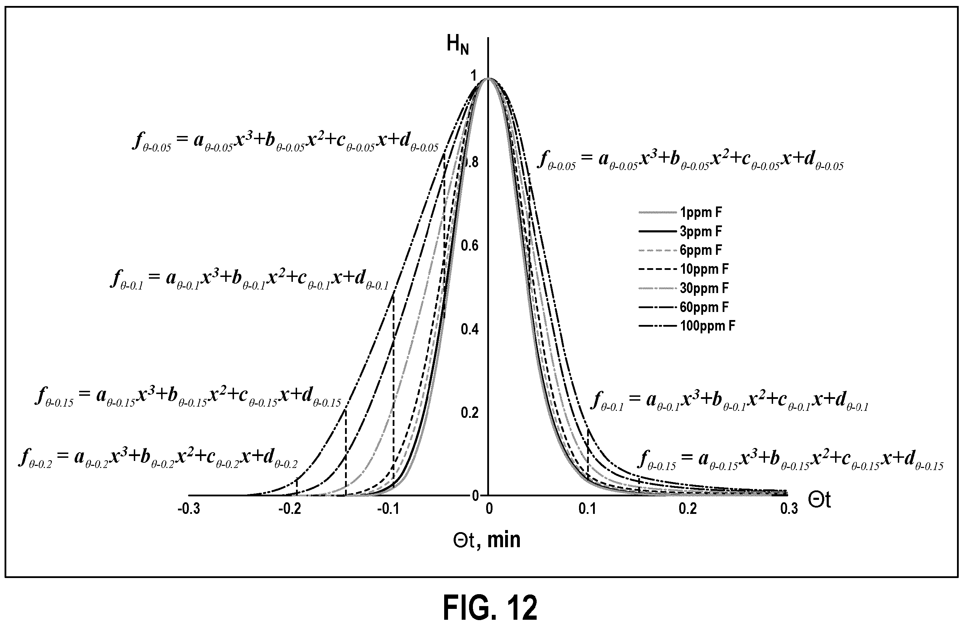

This fitting process can be performed for all time intervals throughout the peak profile. As such, the process results in multiple fits along the time axis ($\theta$t). Each of the constants, $a_{\theta t}$, $b_{\theta t}$, $c_{\theta t}$ and $d_{\theta t}$, are specific to their $\theta$t time interval. $f_{\theta t}$ and $x$ represent, respectively, the normalized height at $\theta$ t and the non-normalized peak area. Depicted in FIGS. 11A-11C are illustrative single fits for sets of Fluoride peaks at $\theta$t equal to -0.1, $\theta$t equal to -0.05, and $\theta$t equal to 0.1. Thereafter, as depicted in FIG. 12, a representation of the overall fitting for the entire peak can be created.

In other embodiments, the normalized peaks of different concentrations could be fitted according to the generalized Gaussian model, wherein the four parameters for the Gaussian model are mapped in terms of four tangible equations each given as polynomial expressions of absolute peak height or area.

Peak-Printing Second Step: Matching of an Unknown Peak

The peak area of the peak profile of the unknown test analyte can be imputed into the equation chain from the mapping calibration for the known analyte whose identity is being tested for matching and/or correlation. The output from the mapping calibration is the predicted profile for that particular analyte at the unknown analyte's peak area or peak height. The normalized peak profile of the unknown analyte can be matched with the normalized peak profile of the known analyte's distribution in the coordinate system. The identity can be confirmed, for example, in two ways.

First, using the coefficient of determination data comparison method of Eq. 1, an $R^2$ value above the threshold value (0.999, for example) can be determined as a confirmation of identity whereas the identity can be rejected for an $R^2$ below the threshold value. When using Eq. 1, the term $f_{\theta t}$ (see Eq. 3) can correspond to $f_i$ and the term $y_{\theta t}$ (i.e. data point of the unknown normalized peak at time $\theta$t) can correspond to $y_i$.

Alternatively, using the absolute percent error (APE) method of Eq's. 2, 2B, 2C, and 2D, if the minimum SODPP of the entire set of data points making up the unknown analyte' peak profile has less than the chosen APE threshold value, a positive identification can be confirmed. Otherwise, a positive identification can be denied. Either of the above methods, or similar data comparison methods, can independently be used at this step. When using Eq. 2A, the term $f_{\theta t}$ (see Eq. 3) can correspond to $f_i$ and the term $y_{\theta t}$ (i.e. data point of the unknown normalized peak at time $\theta$t) can correspond to $y_i$.

Relevant Parameters

One important parameter is the sampling frequency. A high sampling frequency may be used to obtain an adequate number of time intervals along the time axis ($\theta$t). For example, a high sampling frequency may result in $R^2$ values becoming more accurate. In some embodiments, a data acquisition rate of 50 hertz may yield accurate results. However, for data acquired at lower frequencies, such as the typical data collection rate of 5 hertz, additional post processing may be done to increase the sampling frequency, such as performing an up-sampling process consisting of using a polynomial of the third order for interpolation.

Another important parameter involves utilizing optimal concentration ranges for mapping calibration points. A typical calibration curve contains two or three points per order of magnitude. Three points per order of magnitude means that, for example, a single order of magnitude calibration ranging from 1 ppm to 10 ppm will contain three concentrations, such as 1 ppm, 3 ppm and 6 ppm. Peak-printing can be achieved with two or three points per order of magnitude without a significant decrease in performance. Single point calibration, or just a single normalized standard peak, may be used at lower concentrations, particularly when the analyte concentration is close to the calibration of interest. The number of points required for peak printing can be similar to what the user uses for calibration for achieving quantitation in chromatography.

Example 1: Analytes Separated on an IonPac AS15 2x250 mm Column

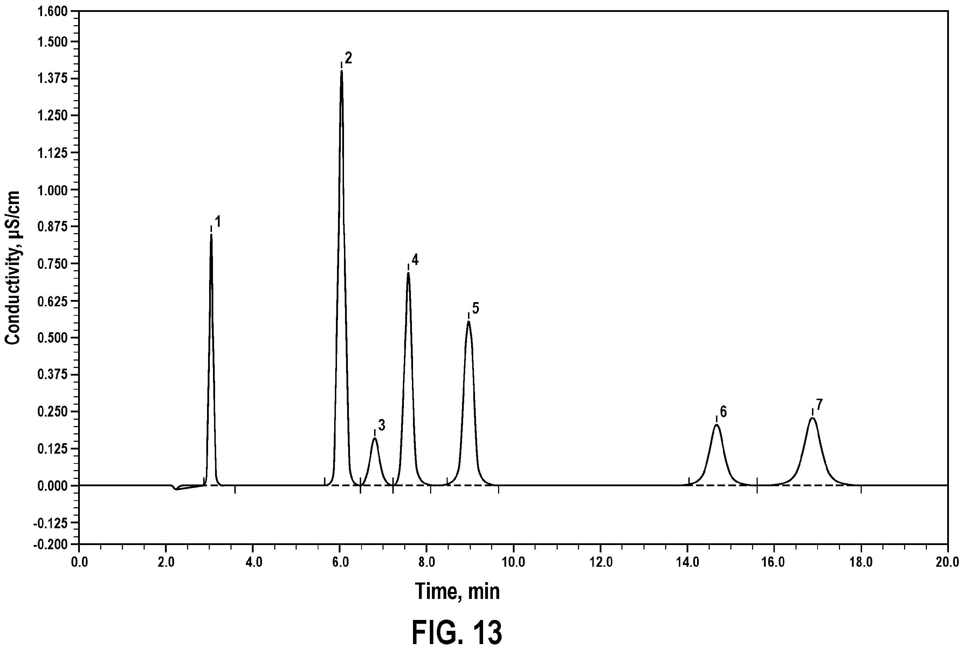

In a first example, depicted in FIG. 13, ion chromatography data was generated with an ion chromatography system commercially available from Thermo Scientific™ Dionex™ ICS-6000 system. The peak integration method was performed with a chromatography data system commercially available from Thermo Scientific™ Chromeleon 7 software system. Standards calibration was performed with a standard solution containing 6 anions (20 ppm F$^-$ and 100 ppm Cl$^-$, NO$_2^-$, SO$_4^{2-}$, Br$^-$, and NO$_3^-$), diluted 1 to 1000 fold. Experimental conditions were as listed: electrolytic eluent generator was set to 38 mM KOH, pump flow was set to 0.30 mL/min, 5 $\mu$L of sample was injected, chromatography column temperature was set to 30 °C, AERS anion electrolytic suppressor had an inner diameter of 2 mm (29 mA applied current), guard anion exchange chromatography column (Dionex™ IonPac™ AG15 2x50 mm, 9 micron diameter particle size), and anion exchange chromatography column (Dionex™ IonPac™ AS15 2x250 mm, 9 micron diameter particle size). The column dimensions were listed as the inner diameter x length. The IonPac™ AG15 and AS15 particles were both prepared with 55% substrate crosslinking and have alkanol quaternary ammonium functional groups with medium high hydrophobicity. In accordance with FIG. 13, the resultant order of the peaks were as follows: 1 - Fluoride 0.2 ppm, 2 - Chloride 1 ppm, 3 - Carbonate (amount not available), 4 - Nitrite 1 ppm, 5 - Sulfate 1 ppm, 6 - Bromide 1 ppm, 7 - Nitrate 1 ppm.

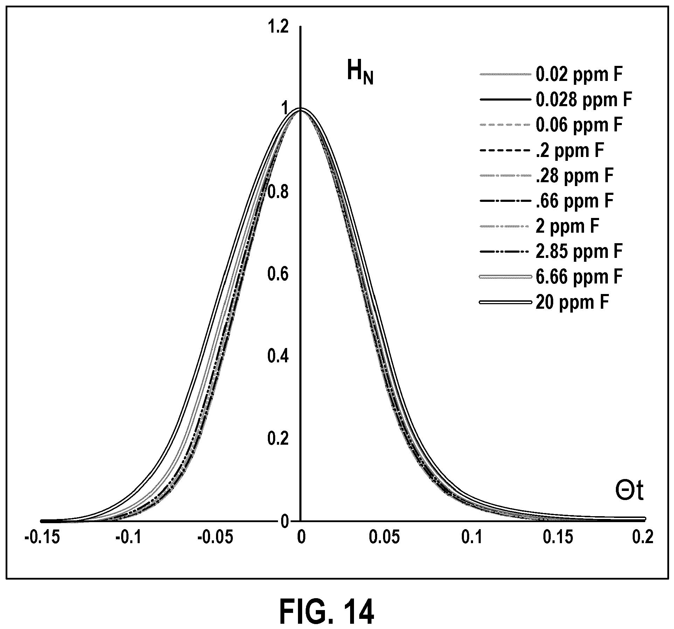

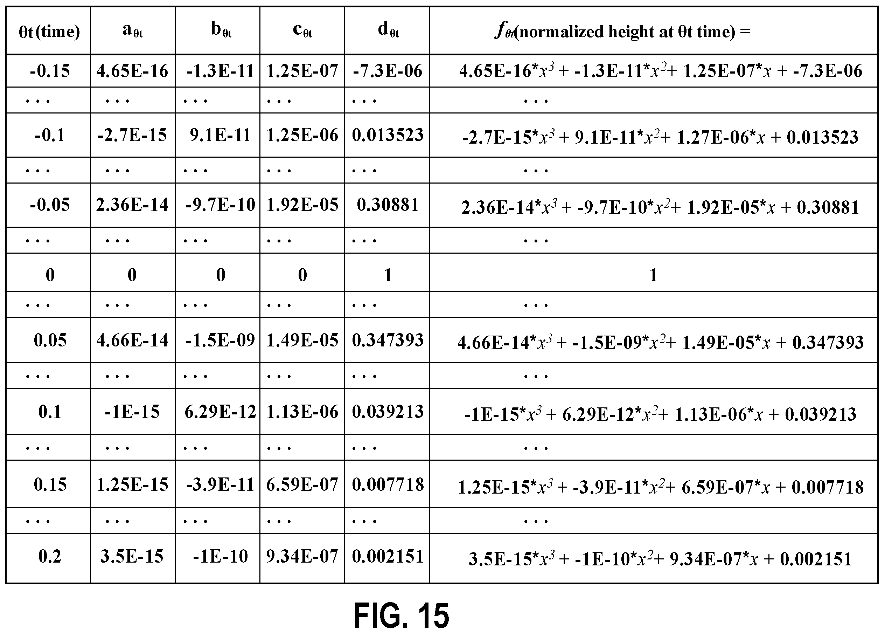

For each analyte, the mapping calibration was constructed. Depicted in FIG. 14 is the mapping calibration of Fluoride at ten different concentrations over 3 orders of magnitude. A snippet of the best fit constant at each time ($\theta t$) from the mapping calibration is shown in the table depicted in FIG. 15 for $F^-$. The variable $x$ represents the non-normalized peak area for a particular analyte. The peak profile for any chosen peak area is reconstructed from the normalized height output at each time ($\theta t$) interval. In other words, for each time ($\theta t$) value there is already a stored $f_{\theta t} = a_{\theta t}{}^* x^3 + b_{\theta t}{}^* x^2 + c_{\theta t}{}^* x + d_{\theta t}$ equation, with the non-normalized peak area being the input variable $x$ and the normalized height being the output variable $f_{\theta t}$. Therefore, inputting the non-normalized peak area x in the mapping calibration automatically results in the predicted peak profile from the individual normalized heights along the time ($\theta t$) axis.

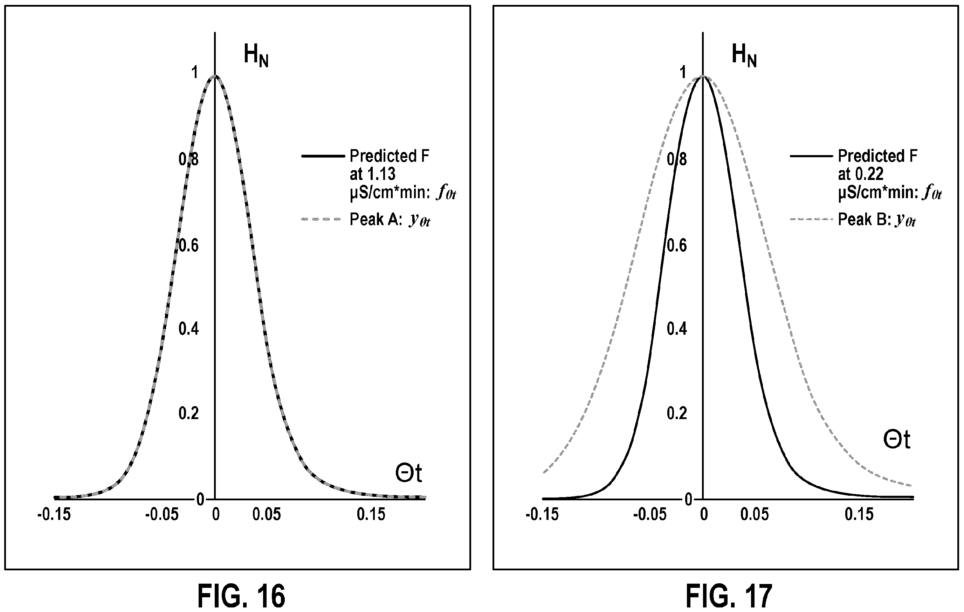

As depicted in FIGS. 16-17, two unknowns, peak A and peak B, were tested for Fluoride identification. The non-normalized area of Peak A was 1.13 $\mu$S/cm*min. Therefore, variable x was equal to 1.13. At each time ($\theta t$) interval, the normalized height of the peak profile was calculated using x = 1.13 $\mu$S/cm*min according to a predetermined Fluoride mapping calibration. The final output is the predicted normalized Fluoride peak ($f_{\theta t}$) for an area of 1.13 $\mu$S/cm*min, as illustrated in FIG. 16. The predicted profile ($f_{\theta t}$) was matched with peak A ($y_{\theta t}$), as shown in FIG. 16 ($R^2$ was equal to 1.0000, therefore identification is confirmed). In this experiment, Peak A was 2.85 ppm Fluoride. Moving to FIG. 17, the non-normalized area of Peak B was 0.22 $\mu$S/cm*min. The same process mentioned above was repeated for peak B. The final output was the predicted normalized Fluoride peak profile ($f_{\theta t}$) for an area of 0.22 $\mu$S/cm*min. The predicted profile ($f_{\theta t}$) was then correlated with peak B ($y_{\theta t}$), as depicted in FIG. 17. In this experiment, $R^2$ is equal to 0.7580, therefore identification of Peak B as Fluoride was denied. Peak B, in this experiment, was found to be 1.00 ppm Chloride by performing an $R^2$ calculation using the mapping calibration for Chloride with an $x$ of 0.22 $\mu$S/cm*min. In an aspect, once a peak is identified, the concentration level of the identified peak can then be determined based on the non-normalized peak areas measured for a range of known analyte concentration levels.

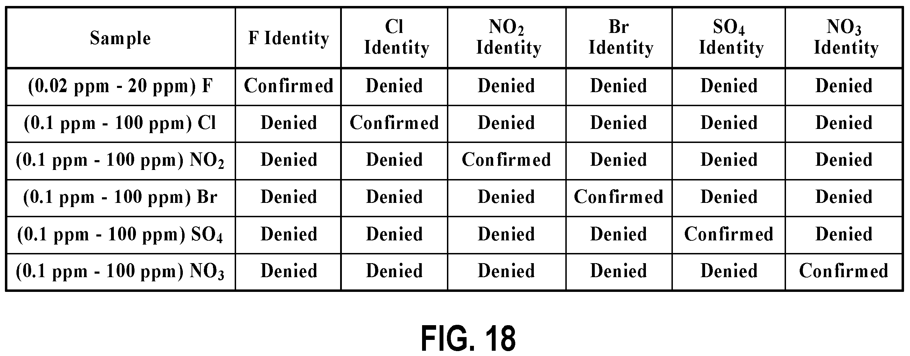

For further analysis, the above mapping calibration was completed for each of the six analytes, which were $F^-$, $Cl^-$, $NO_2^-$, $Br^-$, $SO_4^{2-}$, and $NO_3^-$. The entire set of peaks (six analytes tested at ten different concentration levels over 3 orders of magnitude) was tested for each of the six-analytes' identities. The known concentration levels for fluoride were 0.02, 0.028, 0.06, 0.2, 0.28, 0.66, 2, 2.85, 6.66, and 20 ppm. The known concentration levels for each of chloride, nitrite, bromide, sulfate, and nitrate were 0.1, 0.3, 0.6, 1, 3, 6, 10, 30, 60, 100 ppm. The table depicted in FIG. 18 illustrates that each peak profile was correctly identified for each of the ten concentration levels using Eq. 1 with a threshold $R^2$ value of 0.999 without any errors or misidentifications. For example, the non-normalized peak was measured at 0.02 ppm concentration level of $F^-$ to determine $x$. Next, the mapping calibration was applied by inputting the $x$ for 0.02 ppm $F^-$ peak into the various $f_{\theta t}$ equations at various $\theta t$ time values for $F^-$. The $R^2$ value for the 0.02 ppm $F^-$ peak was greater than or equal to 0.999 to verify that it was Fluoride. A similar calculation was performed for the other $F^-$ peaks (at the 0.028, 0.06, 0.2, 0.28, 0.66, 2, 2.85, 6.66, and 20 ppm levels) to verify that their identity was Fluoride too by calculating the $R^2$ values. Now that all ten of the Fluoride peaks were verified for identity using the $R^2$ test (see row 2 of FIG. 18), the remaining peaks $Cl^-$, $NO_2^-$, $Br^-$, $SO_4^{2-}$, and $NO_3^-$ were verified for their identity using the $R^2$ test (see row 3 to 7 of FIG. 18). As such, the systems and methods described herein permits accurate identification using a concentration-sensitive detector, such as conductivity, and without the need for an identification tool employing a mass-to-charge ratio or a retention time-based labeling routine.

Example 2: Peak Printing of a Drinking Water Sample

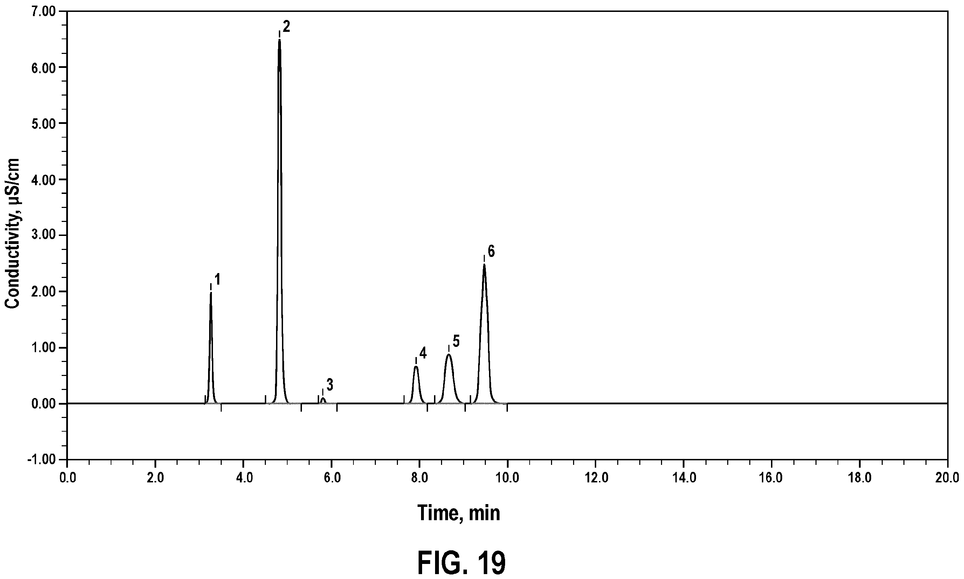

In another example, data was generated with a Thermo Scientific™ Dionex™ ICS-6000 ion exchange chromatography system in a manner similar to Example 1. Experimental conditions included: electrolytic eluent generator was set to 20 mM KOH, flow was set to 1.00 mL/min, 10 $\mu$L of sample was injected, chromatography column temperature was set to 30 °C, AERS anion electrolytic suppressor had an inner diameter of 4 mm, and the anion exchange chromatography column was IonPac AS19 4x150 mm 4$\mu$m diameter particle size. The IonPac™ AS19 particles were both prepared with 55% substrate crosslinking, have alkanol quaternary ammonium functional groups with ultralow hydrophobicity. A sample of drinking water was tested and, as depicted in FIG. 19, the peak profiles were peak-printed for identity confirmation. The non-normalized peak areas ($x$) were recorded for each of the six peaks. Next, the $f_{\theta t}$ values were calculated based on the non-normalized peak areas ($x$) for a range of $\theta t$ values based on a library of known analytes $F^-$, $Cl^-$, $NO_2^-$, $Br^-$, $SO_4^{2-}$, and $NO_3^-$ (e.g., see FIG. 15). The identification values $R^2$ were calculated using Eq. 1 and includes: peak 1-Fluoride $R^2$ was equal to 0.9999, peak 2-Chloride $R^2$ was equal to 0.9999, peak 3-Nitrite $R^2$ was equal to 0.9999, peak 4-Nitrate $R^2$ was equal to 1.0000, and peak 6-Sulfate $R^2$ was equal to 0.9998. The threshold value was chosen to be 0.999. As such, the Fluoride, Chloride, Nitrite, Sulfate, and Nitrate identities were successfully confirmed. The fifth peak in this example corresponds to Carbonate, which is a contamination that is inherently present in drinking water and is not of any particular interest in this experiment.

Example 3: Peak Identification of Peaks Having the Same Retention Time

One or more of the embodiments of this disclosure are operable to reduce errors resulting in misidentifying a peak profile of a given analyte. For example, if two analytes, analyte A and analyte B, have nearly the same retention time, the analyst would like to determine with substantial certainty that a single unknown peak eluting is either solely A or solely B, and not both A and B combined. However, analytes' interactions with the stationary phase were not solely confined to partitioning. A multitude of interactions within the chromatographic column can also shape the peak. As such, two peaks having nearly the same retention time, but different overall interactions with the stationary phase, can in some circumstances end up having different peak profile shapes. For illustration, Nitrate and Sulfate standards were run on an anion exchange Ion Pac AS19 2x250 mm chromatography column (4 micron diameter particle size) at 25.5 mM KOH, such that they have nearly the same retention time, as depicted in FIG. 20. The data illustrated in FIG. 20 was generated with a Thermo Scientific™ Dionex™ ICS-6000 ion exchange chromatography system, wherein the experimental conditions are as follows: electrolytic eluent generator was set to 25.5 mM KOH, pump flow was set to 0.25 mL/min, 2.5 $\mu$L of sample was injected, chromatography column temperature was set to 30 °C. AERS anion electrolytic suppressor had an inner diameter of 2 mm (16 mA applied current), and ion chromatography column (Dionex IonPac AS19 2x250 mm 4 $\mu$m diameter particle size). In accordance with Fig. 20, the resultant order of the peaks is as follows: peak 1- Carbonate, peak 2 - Sulfate, peak 3- Nitrate.

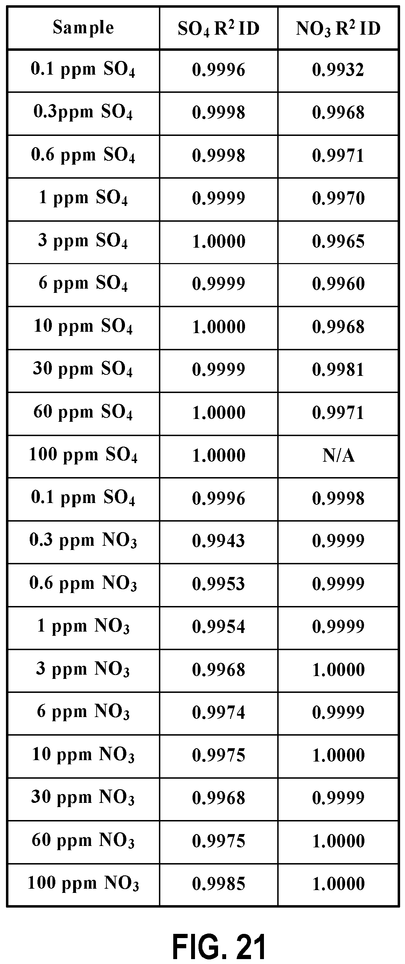

In this example, the peak-printing systems and methods disclosed herein are applied to both calibration sets of Nitrate and Sulfate (0.1 ppm to 100 ppm). As depicted in FIG. 21, all the Sulfate peaks were confirmed to be Sulfate, and all of the Nitrate peaks were confirmed to be Nitrate based on a threshold of greater than or equal to 0.999. In addition, all the Sulfate peaks were confirmed as not being Nitrate, and all of the Nitrate peaks were confirmed as not being Sulfate because the $R^2$ values were less than 0.999. As such, no misidentifications were observed. A sample comprising 100 ppm of Sulfate, which had a non-normalized peak area value (e.g., x) outside of the Nitrate mapping calibration range, was listed as N/A for Nitrate identity.

Example 4: Experimental Application, IonPac AS18

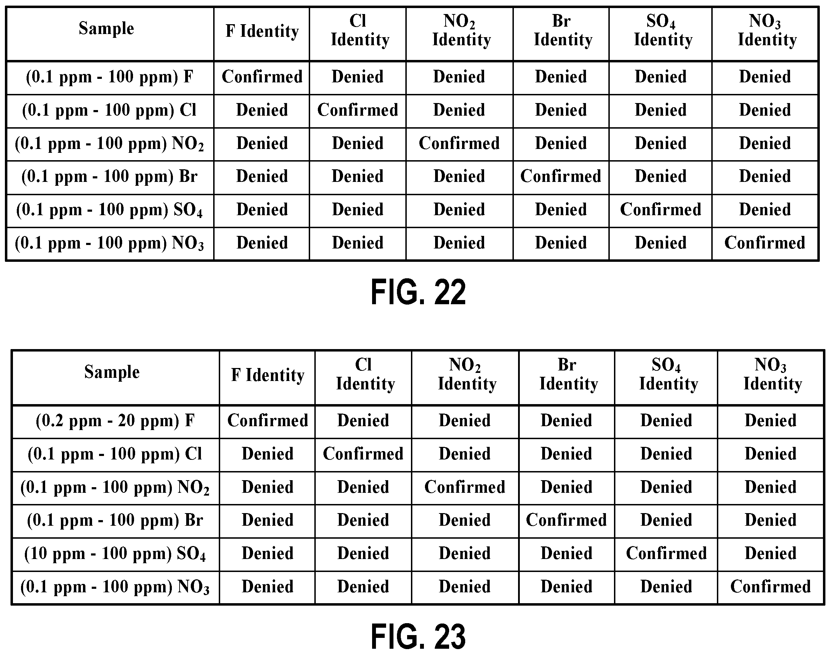

In another example, data is generated with an anion exchange chromatography Thermo Scientific™ Dionex™ ICS-6000 system, and having the following experimental conditions: electrolytic eluent generator was set to 23 mM KOH, pump flow was set to 0.25 mL/min, 2.5 $\mu$L of sample was injected, chromatography column temperature was set to 30 °C, AERS anion electrolytic suppressor had an inner diameter of 2 mm, and anion exchange Dionex IonPac AS18 chromatography column (2x150 mm column size, 4 $\mu$m diameter particle size). The IonPac™ AS18 particles were prepared with 4 micron diameter substrate particles with 55% crosslinking, 65 nm diameter latex particles, and have alkanol quaternary ammonium function groups with low hydrophobicity. The mapping calibration was completed for each of the six analytes, which were $F^-$, $Cl^-$, $NO_2^-$, $Br^-$, $SO_4^{2-}$, and $NO_3^-$. The six analytes were tested at ten different concentration levels over 3 orders of magnitude). The known concentration levels for each of fluoride, chloride, nitrite, bromide, sulfate, and nitrate were 0.1, 0.3, 0.6, 1, 3, 6, 10, 30, 60, 100 ppm. After establishing the mapping calibration constants, the data was re-evaluated to verify that the model could identify the analytes accurately with an IonPac AS 18 chromatography column. The table depicted in FIG. 22 illustrates that each peak profile was correctly identified for each of the ten concentration levels using Eq. 1 with a threshold $R^2$ value of 0.999 without any errors or misidentifications.

Example 5: Experimental Application, IonPac AS19

In another example, data is generated with an anion exchange chromatography Thermo Scientific™ Dionex™ ICS-6000 system, and having the following experimental conditions: electrolytic eluent generator was set to 20 mM KOH, pump flow was set to 0.25 mL/min, 2.5 $\mu$L of sample was injected, chromatography column temperature was set to 30 °C, AERS anion electrolytic suppressor had an inner diameter of 2 mm, and anion exchange IonPac AS19 chromatography column (2x150 mm, 4 $\mu$m diameter substrate particles). The mapping calibration was completed for each of the six analytes, which were $F^-$, $Cl^-$, $NO_2^-$, $Br^-$, $SO_4^{2-}$, and $NO_3^-$. The six analytes were tested at ten different concentration levels over 3 orders of magnitude). The known concentration levels for fluoride were 0.02, 0.028, 0.06, 0.2, 0.28, 0.66, 2, 2.85, 6.66, and 20 ppm. The known concentration levels for each of chloride, nitrite, bromide, sulfate, and nitrate were 0.1, 0.3, 0.6, 1, 3, 6, 10, 30, 60, 100 ppm. After establishing the mapping calibration constants, the data was re-evaluated to verify that the model could identify the analytes accurately with an IonPac AS19 chromatography column. The table depicted in FIG. 23 illustrates that each peak profile was correctly identified for each of the ten concentration levels using Eq. 2A with a threshold APE value of 5% and a SODPP value of 60% without any errors or misidentifications.

Example 6: Experimental Application: IonPac AS22

In another example, data is generated with an anion exchange chromatography Thermo Scientific™ Dionex™ ICS-6000 system, and having the following experimental conditions: Eluent was set to 4.5 mM $Na_2CO_3$/1.4 mM $NaHCO_3$, pump flow was set to 1.20 mL/min, 2.5 $\mu$L of sample was injected, chromatography column temperature was set to 30 °C, AERS anion electrolytic suppressor had an inner diameter of 4 mm, and anion exchange IonPac AS22 Fast chromatography column (4x150 mm, 4 $\mu$m diameter substrate particles). The IonPac™ AS22 substrate particles were prepared with 55% crosslinking and have alkanol quaternary ammonium functional groups with ultralow hydrophobicity. The mapping calibration was completed for each of the six analytes, which were $F^-$, $Cl^-$, $NO_2^-$, $Br^-$, $SO_4^{2-}$, and $NO_3^-$. The six analytes were tested at ten different concentration levels over 3 orders of magnitude). The known concentration levels for fluoride were 0.02, 0.028, 0.06, 0.2, 0.28, 0.66, 2, 2.85, 6.66, and 20 ppm. The known concentration levels for each of chloride, nitrite, bromide, sulfate, and nitrate were 0.1, 0.3, 0.6, 1, 3, 6, 10, 30, 60, 100 ppm. After establishing the mapping calibration constants, the data was re-evaluated to verify that the model could identify the analytes accurately with an IonPac AS22 chromatography column. Each peak profile was correctly identified for each of the ten concentration levels using Eq. 1 with a threshold $R^2$ value of 0.999 without any errors or misidentifications.

Example 7: Experimental Application: IonPac CS16

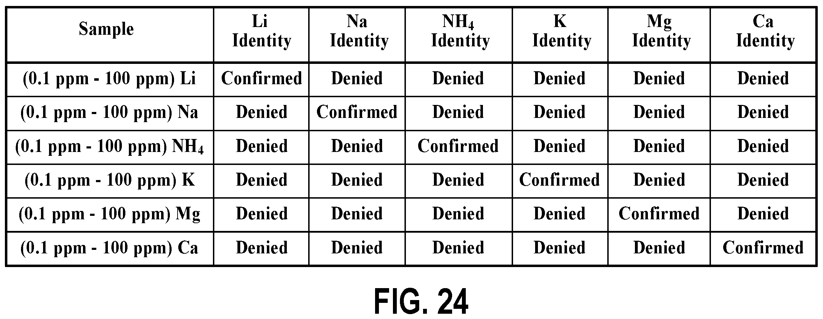

In another example, data is generated with a cation exchange chromatography Thermo Scientific™ Dionex™ ICS-6000 system, and having the following experimental conditions: electrolytic eluent generator was set to 30 mM methanesulfonic acid (MSA), pump flow was set to 0.16 mL/min, 10 $\mu$L of sample was injected, chromatography column temperature was set to 40 °C, CERS cation electrolytic suppressor had an inner diameter of 2 mm, and cation exchange IonPac CS16 chromatography column (2 x 150 mm and 5.5 $\mu$m micron diameter substrate particles). The IonPac™ CS16 substrate particles were prepared with 55% crosslinking and have carboxylic acid functional groups with medium hydrophobicity. The mapping calibration was completed for each of the six analytes, which were $F^-$, $Cl^-$, $NO_2^-$, $Br^-$, $SO_4^{2-}$, and $NO_3^-$. The six analytes were tested at ten different concentration levels over 3 orders of magnitude). The known concentration levels for each of lithium ($Li^+$), sodium ($Na^+$), ammonium ($NH_4^+$), potassium ($K^+$), magnesium ($Mg^{2+}$), and calcium ($Ca^{2+}$) were 0.1, 0.3, 0.6, 1, 3, 6, 10, 30, 60, 100 ppm. After establishing the mapping calibration constants, the data was re-evaluated to verify that the model could identify the analytes accurately with an IonPac CS16 chromatography column. The table depicted in FIG. 24 illustrates that each peak profile was correctly identified for each of the ten concentration levels using Eq's. 2B and 2C with a threshold APE value of 5% and a SODPP value of 80% without any errors or misidentifications.

Identification and Quantitation of Coeluting Analytes

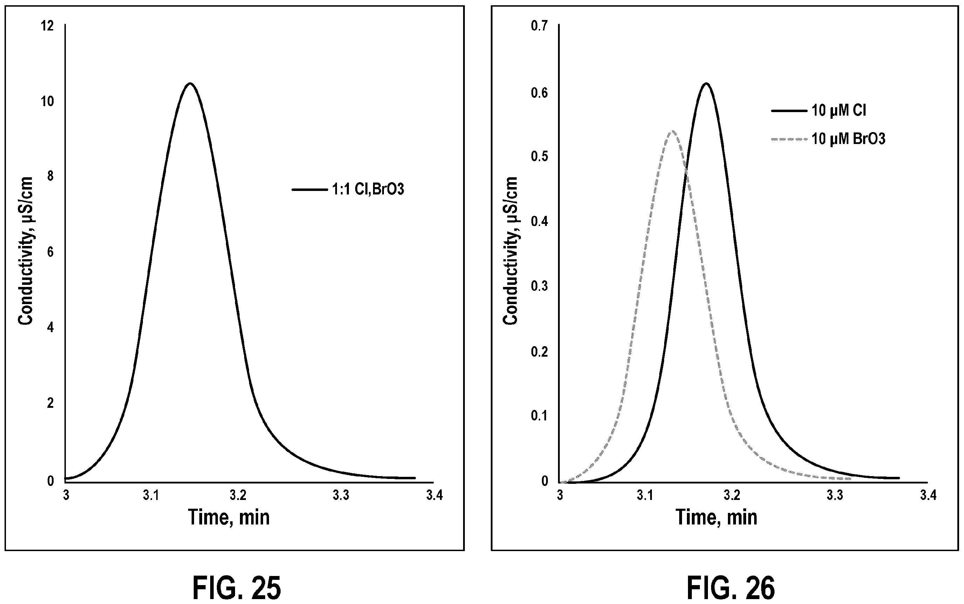

In the case of coeluting analytes, quantitation is still possible. As depicted in FIGS. 25-26, coelution quantitation is demonstrated on Bromate and Chloride peaks where separation is otherwise unachievable on an anion exchange IonPac AS18 chromatography column. As depicted in FIG. 25, a 1:1 equimolar mixture of Bromate and Chloride (100 micromolar concentration) leads to a single peak. However, individual injections of Bromate and Chloride (both at 10 micromolar concentration) in two separate chromatograms provided different results where Bromate and Chloride are now partially overlapping peaks that have slightly different retention times highlighting their poor resolution, as depicted in FIG. 26. The experimental conditions were the same as in Example 4 above.

The quantitation of the Bromate and Chloride in the mixtures was achieved using the individual peak profiles of Bromate and Chloride. The following equation was used to model a peak representing a combination of Bromate and Chloride.

$$H_{i,\text{Cl/BRO3}} = a * H_{i,\text{Cl}} + b * H_{i,\text{BrO3}} \hspace{2cm} (\text{Eq. 4})$$

The term $H_{i,\text{Cl/BRO3}}$ represent the predicted signal height for a mixture of chloride and bromate at time i, $H_{i,\text{Cl}}$ represents the signal height of a chloride sample only at a time i, $H_{i,\text{BrO3}}$ represents the signal height of a bromate sample only at a time i, and **a** and **b** both represents constants. In an aspect, the terms $H_{i,\text{Cl}}$ and $H_{i,\text{BrO3}}$ can be determined based on the two chromatograms shown in FIG. 26. The actual signal height for a mixture of chloride and bromate can be ascribed to the term $H_{i,\text{Cl/BRO3,actual}}$ based the single chromatogram in FIG. 25. The best fit between the actual signal height $H_{i,\text{Cl/BRO3,actual}}$ and the predicted signal height $H_{i,\text{Cl/BRO3}}$ can be determined by determining a combination of the constants **a** and **b** that results in the least amount of error fit (or residuals) for a time interval range of i. In an aspect, MS solver can be used to determine the constants **a** and **b** that provide the least amount of overall error between $H_{i,\text{Cl/BRO3,actual}}$ and $H_{i,\text{Cl/BRO3}}$. The result, depicted in Table 1 below, compares the injected concentration versus the predicted concentrations. Once the optimized constants **a** and **b** were determined, a range of peak heights for both of the chloride and bromate peaks can then be determined. In turn, the peak areas can be used to determine the predicted concentrations in Table 1. For ratios higher than 1:20, higher percentages of errors are observed. Nevertheless, the ability to predict the expected concentrations when the peak is comprised of two components, but is observed as a single peak, is another key benefit of the systems and methods described herein. It should be understood, however, that a user can verify the presence of other peaks by performing the application using a mass spectrometry detector. However, the systems and methods presented herein provide a preliminary, low-cost tool to quickly verify the identity of components separated by ion chromatography. With a concentration sensitive detector it would be not possible to identify the coelution or quantitate the peaks without the present invention.

Table 1. Quantitation of Bromate and Chloride Mixtures

| | Injected $\mu$M | | Predicted | |
|---|---|---|---|---|
| Ratio | $BrO_3$ | Cl | $BrO_3$ | Cl |
| 1:1 | 100 | 100 | 102.6 | 109.2 |
| 1:2 | 50 | 100 | 53.9 | 106.6 |
| 1:10 | 10 | 100 | 11.5 | 108.2 |
| 1:20 | 5 | 100 | 6.5 | 103.4 |
| 1:100 | 1 | 100 | 1.5 | 105.0 |

Deconvolution of Partially Resolved Peaks

For a partially resolved peak profile wherein only one of two peaks is that of a known analyte, peak-printing can be applied for deconvolution. An identification routine, for example, using the absolute percent error (APE) data comparison method disclosed herein, may be applied to expose regions where the identity of the known analyte can be confirmed. The information obtained from the confirmed region can then be used to predict the entire peak profile of the known analyte. Thus, deconvolution can be achieved by subtracting the known predicted peak profile from the original, overlapped peak profile. For illustration, deconvolution is performed on a partially resolved Bromide peak with an unknown. The data is generated with an ion chromatography system commercially available from Thermo Scientific™ Dionex™ ICS-5000 system, and having the following experimental conditions: electrolytic eluent generator was set to 23 mM KOH, pump flow was set to 1.0 mL/min, 10 $\mu$L of sample was injected, chromatography column temperature was set to 30 °C, anion exchange IonPac was IonPac AG20 guard chromatography column (4 mm x 50 mm, 11 micron diameter particle size), and anion exchange IonPac was IonPac AS20 chromatography column (4 mm x 250 mm, 7.5 micron diameter particle size).

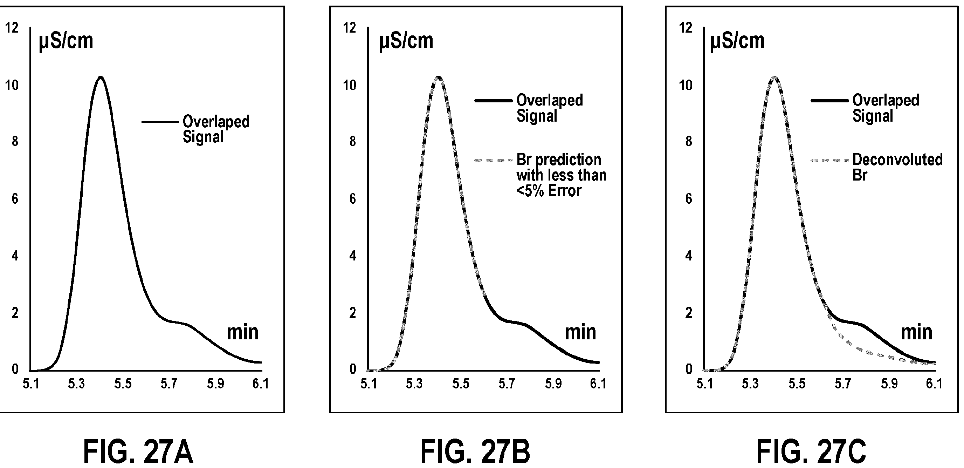

As depicted in FIG. 27A, a Bromide analyte was tested on the partially resolved peaks using the absolute percent error (APE) data comparison method. In this case, Bromide was injected along with a small amount of an impurity (in this case 20 micromolar Nitrate) that partially overlaps with the Bromide peak and provides a shoulder on the right-hand side of the Bromide peak. As an initial matter, the peak combination was analyzed using Eq. 2A to yield a plurality of APE values over a range of i values. The SODPP value was found to be greater than 65%. In other words, 65% or more of the APE values were less than or equal to 5% indicating that the peak was bromide. Next, APE values were analyzed from the lower limit of the peak to the upper limit of the peak indicating that the APE values less than or equal to 5% was in between i values of 5.1 to 5.6 seconds, as illustrated in FIG. 27B. At i values greater than 5.6 seconds, the Bromide peak can be predicted based on the mapping profile equation for Bromide ($f_{\theta t}$), as illustrated in FIG. 27C. It should be noted that in this case, the $f_{\theta t}$ equation was based on the non-normalized peak height (e.g., 10.12 $\mu$S/cm) instead of the non-normalized peak area. As depicted in FIG. 27C, the entire Bromide peak profile is thereafter predicted.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

PREFERRED EMBODIMENTS:

1. A method of determining an identity of a first analyte in a sample, the method comprising:

passing the first analyte through a chromatographic column;
detecting a signal curve of the first analyte by a chromatographic detector, wherein the signal curve includes a peak profile of the first analyte, wherein the peak profile is defined by a plurality of measured data points configured to plot onto a signal coordinate system;
normalizing the peak profile of the first analyte to form a normalized peak profile, wherein the normalized peak profile includes scaling the plurality of measured data points, wherein the normalized peak profile is defined by a plurality of normalized data points configured to plot onto a normalized coordinate system; and
comparing the normalized peak profile of the first analyte with a normalized peak profile of a second analyte.

2. The method of embodiment 1, further comprising:
identifying the first analyte as the second analyte based upon the comparison.

3. The method of embodiment 1, wherein comparing the normalized peak profile of the first analyte with the peak profile of the second analyte includes:

establishing a data correlation threshold;
correlating a plurality of normalized data points of the normalized peak profile of the first analyte with a plurality of normalized data points of the normalized peak profile of the second analyte; and
determining whether the correlation of normalized data points exceeds the data correlation threshold.

4. The method of embodiment 3, wherein comparing the normalized peak profile of the first analyte with a normalized peak profile of a second analyte includes:

calculating a first plurality of absolute proportion errors based on

the plurality of normalized data points of the normalized peak profile of the first analyte, and
a first plurality of known data points corresponding to the normalized peak profile of the second analyte; and

calculating a first identity proportion for the first plurality of absolute proportion errors by dividing a count of the absolute proportion errors that are less than a predetermined absolute proportion threshold with a total number of absolute proportion errors of the first plurality of absolute proportion errors.

5. The method of embodiment 4, further comprising:
identifying the first analyte as the second analyte where the first identity proportion is greater than a predetermined identity threshold.

6. The method of embodiment 4, wherein the first plurality of absolute proportion errors is calculated with a first equation, the first equation comprising:

$$APE_i = \left| \frac{y_i - f_i}{y_i} \right|$$

wherein $APE_i$ is an absolute proportion error of the first plurality of absolute proportion errors for a time value $i$, $y_i$ is a normalized data point of the plurality of normalized data points of the first analyte at the time value $i$, and $f_i$ is a known data point of the first plurality of known data points corresponding to the normalized peak profile of the second analyte at the time value $i$.

7. The method of embodiment 6, in which each of the plurality of normalized data points is based on the time value $i$ and an area or a height of the peak profile of the first analyte.

8. The method of embodiment 4, wherein the first plurality of absolute proportion errors is calculated with a first equation, the first equation comprising:

$$APE_{lh} = \left| \frac{w_{ylh} - w_{flh}}{w_{ylh}} \right| * 100\%$$

wherein $APE_{lh}$ is an absolute proportion error of the first plurality of absolute proportion errors at a proportion $h$ of a left hand side of a normalized peak height, $w_{ylh}$ is a distance from a data point on the left hand side of the normalized peak for the first analyte with a time value $i$ at a proportion $h$ of normalized $H_N$ to the origin, $w_{flh}$ represents a distance from a data point on the left hand side of the normalized peak for the second analyte with a time value $i$ at the proportion $h$ of normalized $H_N$ to the origin.

9. The method of embodiment 4, wherein the first plurality of absolute proportion errors is calculated with a first equation, the first equation comprising:

$$APE_{rh} = \left| \frac{w_{yrh} - w_{frh}}{w_{yrh}} \right| * 100\%$$

wherein $APE_{rh}$ is an absolute proportion error of the first plurality of absolute proportion errors at a proportion $h$ of a right hand side of a normalized peak height, $w_{yrh}$ is a distance from a data point on the right hand side of the normalized peak for the first analyte with a time value $i$ at a proportion $h$ of normalized $H_N$ to the origin, $w_{frh}$ represents a distance from a data point on the right hand side of the normalized peak for the second analyte with a time value $i$ at the proportion $h$ of normalized $H_N$ to the origin.

10. The method of embodiment 4, further comprising:

prior to calculating the first plurality of absolute proportion errors, injecting the first analyte into the chromatographic column for performing a chromatography run; and
detecting a plurality of detector measurements as a function of time, in which a portion of the plurality of detector measurements form the peak profile.

11. The method of embodiment 4, wherein a first, second, third, and fourth constant is calculated with a second equation, the second equation comprising:

$$f_i = a_i x^3 + b_i x^2 + c_i x + d_i$$

wherein $f_i$ is a known data point of the first plurality of known data points corresponding to the normalized peak profile of the second analyte at a time value $i$, $x$ is a known area or a height of a normalized data point of the plurality of normalized data points of the first analyte at different concentrations, $a_i$ is the first constant, $b_i$ is the second constant, and $c_i$ is the third constant, and $d_i$ is the fourth constant.

12. The method of embodiment 11, in which each of the plurality of normalized data points is calculated with the second equation, wherein $f_i$ is a first data point of the plurality of normalized data points corresponding to the normalized peak profile of the first analyte at a time value $i$, $x$ is the known area or the height of a measured data point of the second analyte, $a_i$ is the first constant, $b_i$ is the second constant, and $c_i$ is the third constant, and $d_i$ is the fourth constant.

13. The method of embodiment 1, further comprising:
prior to detecting the signal curve of the first analyte by the chromatographic detector, configuring the chromatographic detector to a sampling frequency of 50 hertz.

14. The method of embodiment 1, further comprising:
prior to comparing the normalized peak profile of the first analyte, plotting the plurality of normalized data points onto the normalized coordinate system.

15. The method of embodiment 14, further comprising:
plotting the normalized peak profile of the second analyte onto the normalized coordinate system.

16. The method of embodiment 1, wherein the first analyte is an analyte having an unknown identity, wherein the second analyte is an analyte having a known identity.

17. A system for determining an identity of a first analyte in a sample, the system comprising:

> a chromatographic column;
> a chromatographic detector configured to detect an amount of an analyte from the chromatographic column, wherein the chromatographic detector is configured to detect a peak profile of the analyte, wherein the peak profile is defined by a plurality of measured data points each having an x and y coordinate configured to plot onto a coordinate system;
> a data processor configured to:

>> receive the plurality of measured data points from the chromatographic detector,
>> adjust the y coordinates of each of the plurality of measured data points of the first analyte to form a normalized peak profile, and
>> compare the normalized peak profile of the first analyte with a normalized peak profile of a second analyte.

18. The system of embodiment 17, wherein the data processor is further configured to calculate a plurality of absolute proportion errors based on

> the normalized peak profile of the first analyte, and
> the normalized peak profile of the second analyte; and

calculate an identity proportion for the plurality of absolute proportion errors by dividing a count of the absolute proportion errors that are less than a predetermined absolute proportion threshold with a total number of absolute proportion errors of the plurality of absolute proportion errors.

19. The system of embodiment 18, wherein the data processor is further configured to identify the first analyte as the second analyte where the identity proportion is greater than a predetermined identity threshold.

20. The system of embodiment 19, wherein the predetermined identity threshold is defined at 80% or greater.

21. The system of embodiment 17, wherein the first analyte is an analyte having an unknown identity, wherein the second analyte is an analyte having a known identity.

22. A method of determining an identity of a first analyte in a sample, wherein the sample is flowed through a chromatographic column, the method comprising:

> detecting a signal curve of the first analyte by a chromatographic detector, wherein the signal curve includes a peak profile of the first analyte, wherein the peak profile is defined by a plurality of measured data points;
> normalizing the plurality of measured data points of the peak profile to form a normalized peak profile, wherein the normalized peak profile includes adjusting a component of each of the plurality of measured data points to define a plurality of normalized data points;
> correlating the normalized peak profile of the first analyte with a normalized peak profile of a second analyte, wherein correlating includes comparing a first shape defined by the normalized peak profile of the first analyte with a second shape defined by the normalized peak profile of the second analyte; and
> determining whether the sample includes the second analyte based upon the correlation.

23. The method of embodiment 22, wherein correlating the normalized peak profile of the first analyte includes:

> calculating a first plurality of absolute proportion errors based on

>> the plurality of normalized data points of the normalized peak profile of the first analyte, and
>> a first plurality of known data points corresponding to the peak profile of the second analyte; and

calculating a first identity proportion for the first plurality of absolute proportion errors by dividing a count of the absolute proportion errors that are less than a predetermined absolute proportion threshold with a total number of absolute proportion errors of the first plurality of absolute proportion errors.

24. The method of embodiment 23, further comprising: identifying the first analyte as the second analyte where the first identity proportion is greater than a predetermined identity threshold.

**Claims**

1. A method of determining an identity of a first analyte in a sample, the method comprising:

passing the first analyte through a chromatographic column;
detecting a signal curve of the first analyte by a chromatographic detector, wherein the signal curve includes a peak profile of the first analyte, wherein the peak profile is defined by a plurality of measured data points configured to plot onto a signal coordinate system;
normalizing the peak profile of the first analyte to form a normalized peak profile, wherein the normalized peak profile includes scaling the plurality of measured data points, wherein the normalized peak profile is defined by a plurality of normalized data points configured to plot onto a normalized coordinate system; and
comparing the normalized peak profile of the first analyte with a normalized peak profile of a second analyte.

2. The method of claim 1, further comprising:
identifying the first analyte as the second analyte based upon the comparison.

3. The method of claim 1, wherein comparing the normalized peak profile of the first analyte with the peak profile of the second analyte includes:

establishing a data correlation threshold;
correlating a plurality of normalized data points of the normalized peak profile of the first analyte with a plurality of normalized data points of the normalized peak profile of the second analyte; and
determining whether the correlation of normalized data points exceeds the data correlation threshold.

4. The method of claim 3, wherein comparing the normalized peak profile of the first analyte with a normalized peak profile of a second analyte includes:

calculating a first plurality of absolute proportion errors based on

the plurality of normalized data points of the normalized peak profile of the first analyte, and
a first plurality of known data points corresponding to the normalized peak profile of the second analyte; and

calculating a first identity proportion for the first plurality of absolute proportion errors by dividing a count of the absolute proportion errors that are less than a predetermined absolute proportion threshold with a total number of absolute proportion errors of the first plurality of absolute proportion errors.

5. The method of claim 4, wherein:

(i) the method further comprises:
identifying the first analyte as the second analyte where the first identity proportion is greater than a predetermined identity threshold; or
(ii) the first plurality of absolute proportion errors is calculated with a first equation, the first equation comprising:

$$APE_i = \left| \frac{y_i - f_i}{y_i} \right|$$

wherein $APE_i$ is an absolute proportion error of the first plurality of absolute proportion errors for a time value $i$, $y_i$ is a normalized data point of the plurality of normalized data points of the first analyte at the time value $i$, and $f_i$ is a known data point of the first plurality of known data points corresponding to the normalized peak profile of the second analyte at the time value $i$.

in which each of the plurality of normalized data points is optionally based on the time value $i$ and an area or a height of the peak profile of the first analyte; or

(iii) the first plurality of absolute proportion errors is calculated with a first equation, the first equation comprising:

$$APE_{lh} = \left| \frac{w_{ylh} - w_{flh}}{w_{ylh}} \right| * 100\%$$

wherein $APE_{lh}$ is an absolute proportion error of the first plurality of absolute proportion errors at a proportion $h$ of a left hand side of a normalized peak height, $w_{ylh}$ is a distance from a data point on the left hand side of the normalized peak for the first analyte with a time value $i$ at a proportion $h$ of normalized $H_N$ to the origin, $w_{flh}$ represents a distance from a data point on the left hand side of the normalized peak for the second analyte with a time value $i$ at the proportion $h$ of normalized $H_N$ to the origin; or

(iv) the first plurality of absolute proportion errors is calculated with a first equation, the first equation comprising:

$$APE_{rh} = \left| \frac{w_{yrh} - w_{frh}}{w_{yrh}} \right| * 100\%$$

wherein $APE_{rh}$ is an absolute proportion error of the first plurality of absolute proportion errors at a proportion $h$ of a right hand side of a normalized peak height, $w_{yrh}$ is a distance from a data point on the right hand side of the normalized peak for the first analyte with a time value $i$ at a proportion $h$ of normalized $H_N$ to the origin, $w_{flh}$ represents a distance from a data point on the right hand side of the normalized peak for the second analyte with a time value $i$ at the proportion $h$ of normalized $H_N$ to the origin; or

(v) the method further comprises:

prior to calculating the first plurality of absolute proportion errors, injecting the first analyte into the chromatographic column for performing a chromatography run; and

detecting a plurality of detector measurements as a function of time, in which a portion of the plurality of detector measurements form the peak profile; or

(vi) a first, second, third, and fourth constant is calculated with a second equation, the second equation comprising:

$$f_i = a_i x^3 + b_i x^2 + c_i x + d_i$$

wherein $f_i$ is a known data point of the first plurality of known data points corresponding to the normalized peak profile of the second analyte at a time value $i$, $x$ is a known area or a height of a normalized data point of the plurality of normalized data points of the first analyte at different concentrations, $a_i$ is the first constant, $b_i$ is the second constant, and $c_i$ is the third constant, and $d_i$ is the fourth constant,

in which each of the plurality of normalized data points is optionally calculated with the second equation, wherein $f_i$ is a first data point of the plurality of normalized data points corresponding to the normalized peak profile of the first analyte at a time value $i$, $x$ is the known area or the height of a measured data point of the second analyte, $a_i$ is the first constant, $b_i$ is the second constant, and $c_i$ is the third constant, and $d_i$ is the fourth constant.

6. The method of claim 1, further comprising:

prior to detecting the signal curve of the first analyte by the chromatographic detector, configuring the chromatographic detector to a sampling frequency of 50 hertz.

7. The method of claim 1, further comprising:

prior to comparing the normalized peak profile of the first analyte, plotting the plurality of normalized data points onto the normalized coordinate system, wherein the method optionally further comprises:

plotting the normalized peak profile of the second analyte onto the normalized coordinate system.

8. The method of claim 1, wherein the first analyte is an analyte having an unknown identity, wherein the second analyte is an analyte having a known identity.

9. A system for determining an identity of a first analyte in a sample, the system comprising:

a chromatographic column;
a chromatographic detector configured to detect an amount of an analyte from the chromatographic column, wherein the chromatographic detector is configured to detect a peak profile of the analyte, wherein the peak profile is defined by a plurality of measured data points each having an x and y coordinate configured to plot onto a coordinate system;
a data processor configured to:

receive the plurality of measured data points from the chromatographic detector,
adjust the y coordinates of each of the plurality of measured data points of the first analyte to form a normalized peak profile, and
compare the normalized peak profile of the first analyte with a normalized peak profile of a second analyte.

10. The system of claim 9, wherein the data processor is further configured to calculate a plurality of absolute proportion errors based on

the normalized peak profile of the first analyte, and
the normalized peak profile of the second analyte; and
calculate an identity proportion for the plurality of absolute proportion errors by dividing a count of the absolute proportion errors that are less than a predetermined absolute proportion threshold with a total number of absolute proportion errors of the plurality of absolute proportion errors.

11. The system of claim 10, wherein the data processor is further configured to identify the first analyte as the second analyte where the identity proportion is greater than a predetermined identity threshold, wherein the predetermined identity threshold is optionally defined at 80% or greater.

12. The system of claim 9, wherein the first analyte is an analyte having an unknown identity, wherein the second analyte is an analyte having a known identity.

13. A method of determining an identity of a first analyte in a sample, wherein the sample is flowed through a chromatographic column, the method comprising:

detecting a signal curve of the first analyte by a chromatographic detector, wherein the signal curve includes a peak profile of the first analyte, wherein the peak profile is defined by a plurality of measured data points;
normalizing the plurality of measured data points of the peak profile to form a normalized peak profile, wherein the normalized peak profile includes adjusting a component of each of the plurality of measured data points to define a plurality of normalized data points;
correlating the normalized peak profile of the first analyte with a normalized peak profile of a second analyte, wherein correlating includes comparing a first shape defined by the normalized peak profile of the first analyte with a second shape defined by the normalized peak profile of the second analyte; and
determining whether the sample includes the second analyte based upon the correlation.

14. The method of claim 13, wherein correlating the normalized peak profile of the first analyte includes:

calculating a first plurality of absolute proportion errors based on

the plurality of normalized data points of the normalized peak profile of the first analyte, and
a first plurality of known data points corresponding to the peak profile of the second analyte; and

calculating a first identity proportion for the first plurality of absolute proportion errors by dividing a count of the absolute proportion errors that are less than a predetermined absolute proportion threshold with a total number of absolute proportion errors of the first plurality of absolute proportion errors.

15. The method of claim 14, further comprising:

identifying the first analyte as the second analyte where the first identity proportion is greater than a predetermined identity threshold.

**FIG. 1**

**FIG. 2**

EP 3 951 384 A1

**FIG. 3**

**FIG. 4**

EP 3 951 384 A1

FIG. 5

**FIG. 6A**

$$APE_{l0.70} = \left| \frac{Wy_{l0.70} - Wf_{l0.70}}{Wy_{l0.70}} \right| * 100\%$$

$$APE_{r0.70} = \left| \frac{Wy_{r0.70} - Wf_{r0.70}}{Wy_{r0.70}} \right| * 100\%$$

$$APE_{l0.50} = \left| \frac{Wy_{l0.50} - Wf_{l0.50}}{Wy_{l0.50}} \right| * 100\%$$

$$APE_{r0.50} = \left| \frac{Wy_{r0.50} - Wf_{r0.50}}{Wy_{r0.50}} \right| * 100\%$$

$$APE_{l0.30} = \left| \frac{Wy_{l0.30} - Wf_{l0.30}}{Wy_{l0.30}} \right| * 100\%$$

$$APE_{r0.30} = \left| \frac{Wy_{r0.30} - Wf_{r0.30}}{Wy_{r0.30}} \right| * 100\%$$

$$APE_{l0.10} = \left| \frac{Wy_{l0.10} - Wf_{l0.10}}{Wy_{l0.10}} \right| * 100\%$$

$$APE_{r0.10} = \left| \frac{Wy_{r0.10} - Wf_{r0.10}}{Wy_{r0.10}} \right| * 100\%$$

$$APE_{l0.05} = \left| \frac{Wy_{l0.05} - Wf_{l0.05}}{Wy_{l0.05}} \right| * 100\%$$

$$APE_{r0.05} = \left| \frac{Wy_{r0.05} - Wf_{r0.05}}{Wy_{r0.05}} \right| * 100\%$$

FIG. 6B

EP 3 951 384 A1

**FIG. 7A**

**FIG. 7B**

EP 3 951 384 A1

**FIG. 8A**

**FIG. 8B**

EP 3 951 384 A1

FIG. 9A

FIG. 9B

FIG. 9C

EP 3 951 384 A1

FIG. 10A

FIG. 10B

FIG. 10C

**FIG. 11A**

Θt= -0.1

$y = -2E-05x^3 + 0.0006x^2 + 0.014x + 0.0036$

Normalized Height

Peak Area, µS/cm*min

**FIG. 11B**

Θt= -0.05

$y = 4E-05x^3 - 0.0026x^2 + 0.0531x + 0.3302$

Normalized Height

Peak Area, µS/cm*min

**FIG. 11C**

Θt= 0.1

$y = -2E-06x^3 + 6E-05x^2 + 0.0042x + 0.0319$

Normalized Height

Peak Area, µS/cm*min

FIG. 12

FIG. 13

FIG. 14

| θt (time) | $a_{θt}$ | $b_{θt}$ | $c_{θt}$ | $d_{θt}$ | $f_{θt}$(normalized height at θt time) = |
|---|---|---|---|---|---|
| -0.15 | 4.65E-16 | -1.3E-11 | 1.25E-07 | -7.3E-06 | $4.65E-16*x^3 + -1.3E-11*x^2 + 1.25E-07*x + -7.3E-06$ |
| . . . | . . . | . . . | . . . | . . . | . . . |
| -0.1 | -2.7E-15 | 9.1E-11 | 1.25E-06 | 0.013523 | $-2.7E-15*x^3 + 9.1E-11*x^2 + 1.27E-06*x + 0.013523$ |
| . . . | . . . | . . . | . . . | . . . | . . . |
| -0.05 | 2.36E-14 | -9.7E-10 | 1.92E-05 | 0.30881 | $2.36E-14*x^3 + -9.7E-10*x^2 + 1.92E-05*x + 0.30881$ |
| . . . | . . . | . . . | . . . | . . . | . . . |
| 0 | 0 | 0 | 0 | 1 | 1 |
| . . . | . . . | . . . | . . . | . . . | . . . |
| 0.05 | 4.66E-14 | -1.5E-09 | 1.49E-05 | 0.347393 | $4.66E-14*x^3 + -1.5E-09*x^2 + 1.49E-05*x + 0.347393$ |
| . . . | . . . | . . . | . . . | . . . | . . . |
| 0.1 | -1E-15 | 6.29E-12 | 1.13E-06 | 0.039213 | $-1E-15*x^3 + 6.29E-12*x^2 + 1.13E-06*x + 0.039213$ |
| . . . | . . . | . . . | . . . | . . . | . . . |
| 0.15 | 1.25E-15 | -3.9E-11 | 6.59E-07 | 0.007718 | $1.25E-15*x^3 + -3.9E-11*x^2 + 6.59E-07*x + 0.007718$ |
| . . . | . . . | . . . | . . . | . . . | . . . |
| 0.2 | 3.5E-15 | -1E-10 | 9.34E-07 | 0.002151 | $3.5E-15*x^3 + -1E-10*x^2 + 9.34E-07*x + 0.002151$ |

# FIG. 15

**FIG. 16**

**FIG. 17**

| Sample | F Identity | Cl Identity | NO$_2$ Identity | Br Identity | SO$_4$ Identity | NO$_3$ Identity |
|---|---|---|---|---|---|---|
| (0.02 ppm - 20 ppm) F | Confirmed | Denied | Denied | Denied | Denied | Denied |
| (0.1 ppm - 100 ppm) Cl | Denied | Confirmed | Denied | Denied | Denied | Denied |
| (0.1 ppm - 100 ppm) NO$_2$ | Denied | Denied | Confirmed | Denied | Denied | Denied |
| (0.1 ppm - 100 ppm) Br | Denied | Denied | Denied | Confirmed | Denied | Denied |
| (0.1 ppm - 100 ppm) SO$_4$ | Denied | Denied | Denied | Denied | Confirmed | Denied |
| (0.1 ppm - 100 ppm) NO$_3$ | Denied | Denied | Denied | Denied | Denied | Confirmed |

## FIG. 18

**FIG. 19**

EP 3 951 384 A1

FIG. 20

EP 3 951 384 A1

| Sample | SO$_4$ R$^2$ ID | NO$_3$ R$^2$ ID |
|---|---|---|
| 0.1 ppm SO$_4$ | 0.9996 | 0.9932 |
| 0.3 ppm SO$_4$ | 0.9998 | 0.9968 |
| 0.6 ppm SO$_4$ | 0.9998 | 0.9971 |
| 1 ppm SO$_4$ | 0.9999 | 0.9970 |
| 3 ppm SO$_4$ | 1.0000 | 0.9965 |
| 6 ppm SO$_4$ | 0.9999 | 0.9960 |
| 10 ppm SO$_4$ | 1.0000 | 0.9968 |
| 30 ppm SO$_4$ | 0.9999 | 0.9981 |
| 60 ppm SO$_4$ | 1.0000 | 0.9971 |
| 100 ppm SO$_4$ | 1.0000 | N/A |
| 0.1 ppm SO$_4$ | 0.9996 | 0.9998 |
| 0.3 ppm NO$_3$ | 0.9943 | 0.9999 |
| 0.6 ppm NO$_3$ | 0.9953 | 0.9999 |
| 1 ppm NO$_3$ | 0.9954 | 0.9999 |
| 3 ppm NO$_3$ | 0.9968 | 1.0000 |
| 6 ppm NO$_3$ | 0.9974 | 0.9999 |
| 10 ppm NO$_3$ | 0.9975 | 1.0000 |
| 30 ppm NO$_3$ | 0.9968 | 0.9999 |
| 60 ppm NO$_3$ | 0.9975 | 1.0000 |
| 100 ppm NO$_3$ | 0.9985 | 1.0000 |

## FIG. 21

| Sample | F Identity | Cl Identity | $NO_2$ Identity | Br Identity | $SO_4$ Identity | $NO_3$ Identity |
|---|---|---|---|---|---|---|
| (0.1 ppm - 100 ppm) F | Confirmed | Denied | Denied | Denied | Denied | Denied |
| (0.1 ppm - 100 ppm) Cl | Denied | Confirmed | Denied | Denied | Denied | Denied |
| (0.1 ppm - 100 ppm) $NO_2$ | Denied | Denied | Confirmed | Denied | Denied | Denied |
| (0.1 ppm - 100 ppm) Br | Denied | Denied | Denied | Confirmed | Denied | Denied |
| (0.1 ppm - 100 ppm) $SO_4$ | Denied | Denied | Denied | Denied | Confirmed | Denied |
| (0.1 ppm - 100 ppm) $NO_3$ | Denied | Denied | Denied | Denied | Denied | Confirmed |

FIG. 22

| Sample | F Identity | Cl Identity | $NO_2$ Identity | Br Identity | $SO_4$ Identity | $NO_3$ Identity |
|---|---|---|---|---|---|---|
| (0.2 ppm - 20 ppm) F | Confirmed | Denied | Denied | Denied | Denied | Denied |
| (0.1 ppm - 100 ppm) Cl | Denied | Confirmed | Denied | Denied | Denied | Denied |
| (0.1 ppm - 100 ppm) $NO_2$ | Denied | Denied | Confirmed | Denied | Denied | Denied |
| (0.1 ppm - 100 ppm) Br | Denied | Denied | Denied | Confirmed | Denied | Denied |
| (10 ppm - 100 ppm) $SO_4$ | Denied | Denied | Denied | Denied | Confirmed | Denied |
| (0.1 ppm - 100 ppm) $NO_3$ | Denied | Denied | Denied | Denied | Denied | Confirmed |

FIG. 23

| Sample | Li Identity | Na Identity | NH$_4$ Identity | K Identity | Mg Identity | Ca Identity |
|---|---|---|---|---|---|---|
| (0.1 ppm - 100 ppm) Li | Confirmed | Denied | Denied | Denied | Denied | Denied |
| (0.1 ppm - 100 ppm) Na | Denied | Confirmed | Denied | Denied | Denied | Denied |
| (0.1 ppm - 100 ppm) NH$_4$ | Denied | Denied | Confirmed | Denied | Denied | Denied |
| (0.1 ppm - 100 ppm) K | Denied | Denied | Denied | Confirmed | Denied | Denied |
| (0.1 ppm - 100 ppm) Mg | Denied | Denied | Denied | Denied | Confirmed | Denied |
| (0.1 ppm - 100 ppm) Ca | Denied | Denied | Denied | Denied | Denied | Confirmed |

**FIG. 24**

FIG. 26

FIG. 25

FIG. 27C

FIG. 27B

FIG. 27A

Europäisches
Patentamt

European
Patent Office

Office européen
des brevets

## EUROPEAN SEARCH REPORT

Application Number

EP 21 18 8720

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/082538 A1 (TAYLOR PAUL D [US] ET AL) 1 May 2003 (2003-05-01)<br>* abstract *<br>* paragraph [0029] *<br>* paragraphs [0127] - [0128] *<br>* paragraphs [0230] - [0238] *<br>* paragraphs [0161] - [0163] *<br>* paragraphs [0167] - [0179] *<br>* figures 1, 6,10 * | 1-15 | INV.<br>G01N30/86 |
| X | US 2016/252484 A1 (RUBINSTEIN AVI [IL]) 1 September 2016 (2016-09-01)<br>* abstract *<br>* paragraph [0008] *<br>* paragraph [0029] *<br>* paragraph [0034] *<br>* paragraphs [0069] - [0073] *<br>* figure 1 *<br>* figure 5 * | 1,5,9,13 | |
| | | | **TECHNICAL FIELDS SEARCHED (IPC)**<br><br>G01N |

The present search report has been drawn up for all claims

| Place of search | Date of completion of the search | Examiner |
|---|---|---|
| Munich | 2 December 2021 | Bravin, Michel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 21 18 8720

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2021

| Patent document cited in search report | | Publication date | Patent family member(s) | | Publication date |
|---|---|---|---|---|---|
| US 2003082538 | A1 | 01-05-2003 | AU | 7293301 A | 17-12-2001 |
| | | | EP | 1316049 A2 | 04-06-2003 |
| | | | US | 2003082538 A1 | 01-05-2003 |
| | | | WO | 0195233 A2 | 13-12-2001 |
| US 2016252484 | A1 | 01-09-2016 | EP | 3077938 A1 | 12-10-2016 |
| | | | JP | 2016532881 A | 20-10-2016 |
| | | | US | 2016252484 A1 | 01-09-2016 |
| | | | WO | 2015052721 A1 | 16-04-2015 |

EPO FORM P0459

For more details about this annex : see Official Journal of the European Patent Office, No. 12/82